(19) Europäisches Patentamt
European Patent Office
Office européen des brevets

(11) EP 0 838 506 A1

(12) # EUROPEAN PATENT APPLICATION

(43) Date of publication:
**29.04.1998 Bulletin 1998/18**

(51) Int Cl.$^{6}$: **C09D 7/12**, C09D 5/00, B05D 7/00

(21) Application number: **97402529.8**

(22) Date of filing: **24.10.1997**

(84) Designated Contracting States:
**AT BE CH DE DK ES FI FR GB GR IE IT LI LU MC NL PT SE**
Designated Extension States:
**AL LT LV RO SI**

(30) Priority: **25.10.1996 JP 301039/96**

(71) Applicant: **Nippon Paint Co., Ltd.**
**Kita-ku, Osaka-shi, Osaka 531 (JP)**

(72) Inventors:
- **Yoshimatsu, Saori**
  **Toyonaka-shi, Osaka 560 (JP)**
- **Kubo, Mika**
  **Sakai-shi, Osaka 588 (JP)**

(74) Representative: **Le Roux, Martine et al**
**Cabinet Beau de Loménie**
**158, rue de l'Université**
**75340 Paris Cédex 07 (FR)**

(54) **Paint film for outside plates, coating composition, film forming method, and coated article**

(57) The present invention has for its object to provide a paint film for outside plates having high resistance to fouling by raindrops, particularly fouling by rainwater containing acidic substances, as well as good acid resistance and crack resistance, and a coating composition and a film forming method.

A paint film for outside plates resistant to raindrop fouling, which has a water dynamic rearward tension (Tr) of not less than 47 dyn/cm is provided.

EP 0 838 506 A1

## Description

### TECHNICAL FIELD

The present invention relates to a paint film for outside plates resistant to fouling by raindrops, particularly by rainwater containing acidic substances, to a coating composition, and to a film forming method.

### BACKGROUND ART

The surfaces of the architecture, display boards, guard fences and machines to be installed outdoors are generally covered with a decorative and/or protective paint film. Such a paint film is required to have functional characteristics withstanding outdoor environments, typically weather resistance, impact resistance, and water resistance. Meanwhile, acid rain has been a serious problem in these years and, in that sense, acid resistance is needed to prevent aging (cracking) and fouling of the paint film by acid rain, not to speak of acidic exhaust gases. In addition, the paint film is required to be resistant to various types of fouling.

The fouling resistance mentioned above includes resistance to solvent-based marker fouling, carbon fouling, oil fouling, foodstuff fouling, raindrop fouling, etc. and among the above, resistance to raindrop fouling is an important characteristic of any paint film covering the architecture. Raindrop fouling is the fouling which occurs when the rain is impinged on a coated board installed perpendicularly or at an angle with respect to ground level and the resulting raindrops containing contaminants flow down the surface of the coated board, with the contaminants being deposited on the surface of the coated board along the wake of raindrops, and is also known as rain-flow fouling.

Generally the roof and walls or siding are only infrequently cleaned or repaired and, therefore, the paint film applied to architectural members such as shingles and wainscots are required to have long-term resistance to the above-mentioned fouling by raindrops. Moreover, since many rainfalls involve the acid rain in recent years, resistance to fouling by dripping of rainwater containing acidic substances, in particular, is an important requirement. Today as the top coatings applied to such architectural members, fluorinated coatings are employed for their good weather resistance but for the very reason of this excellent weather resistance, such fluorinated coatings are lacking in the self-cleaning action due to chalking of the paint film and, therefore, provide for insufficient resistance to raindrop fouling.

Recent years have seen a number of proposals made to insure resistance to raindrop fouling or the raindrop-fouling resistance. Takayanagi et al. (The Proceedings of the 1995 Congress of the Architectural Finishing Society of Japan, pp. 207-210) reported that assuming the raindrop fouling of the exterior wall of a building is due to the surface properties of the exterior wall, the contaminants deposited on the exterior wall will be flushed away by rainwater when the wall surface is hydrophilic.

Japanese Kokai Publication Hei-1-141952 discloses a thermosetting resin composition comprising a hydroxyl-containing resin and an alkoxysilyl (SiOR)-containing copolymer. Japanese Kokai Publication Hei-2-75649 discloses a thermosetting resin composition comprising a hydroxyl-containing fluorinated copolymer, a hydrolyzable silyl-containing vinyl polymer, and a curing catalyst.

Those technologies are based on the concept that while a paint film is cured by the formation of Si-O-Si or Si-O-C bonds due to the hydrolysis and condensation of SiOR groups, the residual SiOR groups in the paint film are hydrolyzed in the course of outdoor exposure or aging to hydrophilic SiOH groups to enhance the hydrophilicity of the film surface so that the contaminants deposited on the surface may be flushed away by rainwater, thus providing for a raindrop-fouling resistance.

Those technologies, however, have the drawback that since the SiOR groups take part in the curing reaction when heat is applied for attaining a sufficiently high hardness of the paint film, no sufficient SiOR groups remain on the film surface so that the output of hydrophilic SiOH groups due to hydrolysis is too scarce to maintain the hydrophilicity of the film surface during exposure, thus failing to materialize a satisfactory raindrop-fouling resistance. Conversely if it is arranged to cause many SiOR groups to remain for insuring a sufficient degree of surface hydrophilicity, the required degree of film hardness may not be obtained and the hydrolysis and condensation of SiOR groups on the surface or within the coating film are induced by acid rain or the like, with the result that the coating becomes harder with time to undergo cracking or lose resistance to acid and alkali.

Therefore, a coating composition containing a hydrophilicity-improving agent such as an alkoxysilane condensate has been proposed. Japanese Kokai Publication Hei-6-145453 discloses a hydrophilic curable composition comprising an alkoxysilyl-containing acrylic copolymer, a tetralkyl silicate and/or a condensate thereof, and a curing catalyst. WO Publication 94/06879 discloses a coating composition comprising an organosilicate and/or a condensate thereof such that the contact angle of the film surface with water is not greater than 70 degrees after acid treatment.

Japanese Kokai Publication Hei-7-286126 discloses a binder for inorganic/organic composite coverings which comprises a hydrolyzable silyl-containing fluorinated copolymer hydrolyzate, a siloxane compound, and/or a hydrolyzable silyl-containing acrylic copolymer hydrolyzate. Japanese Kokai Publication Hei-7-68217 discloses a liquid formulation comprising an alkoxysilane hydrolyzate and a polyester resin.

Those technologies are based on the idea that while a paint film is cured by the formation of Si-O-Si or Si-O-C bonds due to hydrolysis and condensation of SiOR groups or formation of urethane bonds due to the blocked isocyanate compound, the SiOR groups in the added alkoxysilane partial hydrolyzed condensate is hydrolyzed by acid treatment or through outdoor exposure to hydrophilic SiOH groups to enhance the hydrophilicity of the film surface so that the contaminants deposited thereon may be flushed away by rainwater, thus providing for the required raindrop-fouling resistance.

However, those technologies have the drawback that said hydrolysis and condensation of SiOR groups in the cured paint film tend to cause cracking of the paint film and it takes time for the added alkoxysilane partial hydrolyzed condensate to express its hydrophilicity-imparting effect. This is because, whereas the terminal SiOR groups of the alkoxysilane partial hydrolyzed condensate are easily hydrolyzed, the other SiOR groups are not easily hydrolyzed. Therefore, an acid treatment is necessary in order that the effect of enhancing the hydrophilicity of the film surface may be sufficiently expressed. If this acid treatment is insufficient, the progress of hydrolysis reaction during exposure is retarded and only an insufficient degree of surface hydrophilicity can be expected until the hydrolysis reaction has progressed to a sufficient extent, with the result that the deposition of contaminants takes place in the meantime.

Furthermore, since the degree of polymerization of such an alkoxysilane partial hydrolyzed condensate is low, the number of SiOR groups per one alkoxysilane partial hydrolyzed condensate is about 2 at most and, therefore, in order that a sufficient degree of hydrophilicity may be materialized on the film surface in an early phase of exposure, a large quantity of alkoxysilane partial hydrolyzed condensate must be formulated, with the result that the paint film undergoes cracking and the coating stability is adversely affected. Furthermore, because of the low degree of polymerization, the molecular weight is also low so that when used in a baking finish, a fairly large proportion of the alkoxysilane partial hydrolyzed condensate is evaporated to cause an insufficient resistance to raindrop fouling.

Meanwhile, it is generally acknowledged that a paint film expressing a satisfactory resistance to raindrop fouling usually has a low contact angle with water. According to WO Publication 94/06879 referred to above, for instance, such a paint film that a contact angle, i.e. a static contact angle, of the surface with water is not greater than 70 degrees may express a satisfactory resistance to raindrop fouling. Seno et al. (the Proceedings of the 1995 Congress of the Architectural Finishing Society of Japan, pp. 211-214), who compared the conventional fluororesin coating with its versions claimed to have been improved in antifouling performance, reported that the diminution of the static contact angle of the film surface with water is paralleled to the decrease in the degree of raindrop fouling, with the authors even referring to the dynamic forward contact angle and dynamic rearward contact angle of the water drops deposited on the paint film.

Actually, however, there are paint films showing satisfactory resistance to raindrop fouling with large static contact angles with water. For example, when a silicon-containing compound is added to a polyfluorovinylidene type fluororesin coating, the relative roughness of the paint film is increased so that the contact angle is increased shifting to the water repellent region but the raindrop-fouling resistance is increased. This is attributed to the formation of a water film due to pooling of water in recesses of the paint film and the contaminants-containing water drops rapidly flow down the water film. On the other hand, when an alkoxysilyl-containing polymer is added to a polyfluorovinylid ene type fluororesin coating to form a paint film, the static contact angle with water shows little change as compared with the case in which such a polymer is not added but the film is better wetted by water so that a satisfactory resistance to raindrop fouling is obtained.

The above discussion finds support in the diagrams presented in Figs. 6 and 7, which were constructed by measuring the static contact angles with water for the conventional paint films inclusive of those mentioned above, evaluating their resistance to raindrop fouling by a 2-month exposure test, and studying the correlation. Thus, it is clear from Fig. 6 that there is no correlation between the static contact angle with water and the raindrop-fouling resistance, with a great dispersion in results. From Fig. 7, it is clear that the static contact angle is substantially constant regardless of the level of addition of the alkoxysilyl-containing polymer but the raindrop-fouling resistance is greater with an increasing proportion of the polymer, thus indicating that the decrease in the static contact angle is not parallel to the decrease in the raindrop fouling.

Those phenomena apparently arise from the following circumstances. Thus, since the static contact angle with water is a parameter representing the ease of spreading of water drops placed on a horizontal surface or the ease of spreading of water drops at the beginning of wetting of a vertical or inclined surface, the raindrop fouling which takes place when the rainwater deposited on a vertical or inclined surface, such as that of a wall or a roof, flows down as water drops cannot be accurately evaluated. Therefore, a static contact angle is not necessarily correlated with the raindrop-fouling resistance and in order that the raindrop-fouling resistance may be accurately evaluated, we need a parameter indicating the water wettability which is relevant to the situation in which water drops flow down a vertical or inclined surface.

As a parameter relevant to the condition in which water drops flow down a vertical or inclined surface, the contact angle of the front end or rear end of a moving water drop can be contemplated. For example, the above-mentioned report of Seno et al. suggests that when the dynamic forward contact angle with water is small, the dust or the like on the surface is readily flushed away. However, the raindrop-fouling resistance is not dictated by the removal of dust alone. Moreover, although they refer to the dynamic rearward contact angle with water, too, Seno et al. discussed it only as a parameter representing the deformation of a water drop when the dynamic forward contact angle with water is small. This dynamic rearward contact angle is the angle in the retreating movement of a water drop on an inclined coated surface, and the value varies with the tilt angle of the coated surface and cannot be used easily for accurate evaluation of the raindrop-fouling resistance. Therefore, the dynamic rearward contact angle is not a pertinent parameter for discussing the raindrop-fouling resistance. In the report of Seno et al., the relationship to the raindrop-fouling resistance is discussed with exclusive attention to the aspect of forward movement of a water drop and they are not presenting a parameter by which the water wettability as applicable to the downfall of water drops may be accurately evaluated.

As inferred from the term acid rain, actual rainwater is acidic in many instances because of contaminants contained in air such as sulfurous acid, nitric acid, and carbon particles arising from incomplete combustion of petroleum oil fuels. Particularly carbon particles tend to be intimately bound to the coated surface during outdoor exposure or in a carbon fouling test and those contaminants can hardly be wiped off. Therefore, when the raindrop-fouling resistance is discussed, it is necessary to take into consideration not only the properties of a paint film with respect to water but also the affinity of the paint film for the above-mentioned contaminants contained in acid rain.

## SUMMARY OF THE INVENTION

In view of the above circumstances, the present invention has for its object to provide a paint film for outside plates having high resistance to fouling by raindrops, particularly fouling by rainwater containing acidic substances, as well as good acid resistance and crack resistance, and a coating composition and a film forming method.

The present invention relates, in a first aspect, to a paint film for outside plates resistant to raindrop fouling, which has a water dynamic rearward tension (Tr) of not less than 47 dyn/cm.

The present invention relates, in a second aspect, to a paint film for outside plates resistant to fouling by rainwater containing acidic substances, which has a surface tension acidity term ($\gamma^+$) of not less than 0.01 mJ/m$^2$.

The present invention relates, in a third aspect, to a paint film for outside plates resistant to fouling by rainwater containing acidic substances, which has a water dynamic rearward tension (Tr) of not less than 47 dyn/cm and a surface tension acidity term ($\gamma^+$) of not less than 0.01 mJ/m$^2$.

The present invention relates, in a fourth aspect, to a coating composition for providing said paint film for outside plates, which comprises a film-forming resin (A) and at least one member selected from the group consisting of an organic polymer (I) having at least one kind of alkoxysilyl group of the following formula (1):

$$-Si(OR^1)_{3-n} \qquad (1)$$

(wherein $R^1$ represents hydrogen; alkyl containing 1-11 carbon atoms ; epoxyalkyl containing 2-11 carbon atoms; aryl containing 6 to 14 carbon atoms optionally substituted by at least one alkyl containing 1 to 8 (preferably 1 to 4) carbon atoms, the total number of carbon atoms in the said aryl being up to 14 ; aralkyl containing 1 to 5 carbon atoms in its alkyl part and 6 to 10 carbon atoms in its aryl part, said aryl part being optionally substituted by at least one alkyl containing 1 to 4 carbon atoms, the total number of carbon atoms in the said aralkyl being up to 11 ; or alkenyl containing 2-11 carbon atoms ; n represents 0, 1 or 2) and a partial hydrolyzed condensate (II) available upon hydrolysis and subsequent condensation of an organosilicon compound of the following general formula (2):

$$R^2{}_m-Si(OR^3)_{4-m} \qquad (2)$$

(wherein $R^2$ represents alkyl containing 1 to 6 carbon atoms ; epoxyalkyl containing 2-11 carbon atoms ; aryl containing 6 to 14 carbon atoms optionally substituted by at least one alkyl containing 1 to 8 (preferably 1 to 4) carbon atoms, the total number of carbon atoms in the said aryl being up to 14; or alkenyl containing 2-11 carbon atoms; $R^3$ represents alkyl containing 1 to 6 carbon atoms ; and m represents 0, 1, 2 or 3) with a degree of hydrolysis of less than 100%.

The present invention relates, in a fifth aspect, to a method for forming a paint film for outside plates resistant to raindrop fouling, which comprises coating a substrate with at least one primer selected from the group consisting of an epoxy resin-based primer, a polyurethane-modified epoxy resin-based primer and a polyester resin-based primer, and then with said coating composition, followed by baking.

The present invention relates, in a sixth aspect, to a coated article resistant to raindrop fouling, which is coated with said paint film for outside plates.

## BRIEF DESCRIPTION OF THE DRAWINGS

Fig. 1 is a schematic section view of an apparatus for measuring the water dynamic rearward tension (Tr).

Fig. 2 is a concept view of the states of a test specimen when the apparatus for measuring the water dynamic rearward tension (Tr) is operated.

Fig. 3 is a graphical representation of the change in load on a test specimen as measured by the apparatus for measuring the water dynamic rearward tension (Tr). The ordinate denotes the load, and the abscissa the displacement.

Fig. 4 is a graphical representation of the relationship between the water dynamic rearward tension (Tr) in Example 1 and the raindrop-fouling resistance.

Fig. 5 is a graphical representation of the relationship between the water dynamic rearward tension (Tr) in Example 3 and the raindrop-fouling resistance.

Fig. 6 is a graphical representation of the relationship between the static contact angle and the raindrop-fouling resistance.

Fig. 7 is a graphical representation of the relationship between the static contact angle and the raindrop-fouling resistance as found when the addition level of an alkoxysilyl-containing polymer was varied.

Fig. 8 is a blistering evaluation schema for use in acid resistance and alkali resistance tests.

## DETAILED DESCRIPTION OF THE INVENTION

The paint film for outside plates according to the first aspect of the present invention has a water dynamic rearward tension (Tr) of not less than 47 dyn/cm. The water dynamic rearward tension (Tr) is a parameter introduced by the present inventors as one of those parameters which determine the water wettability when water drops flow down a wall surface, and it is highly correlated with the raindrop-fouling resistance. In the report of Seno et al. (the Proceedings of the 1995 Congress of the Architectural Finishing Society of Japan, pp. 211-214), for instance, attention was paid to the dynamic forward contact angle and dynamic rearward contact angle of water as parameters determining the shape and form of water drops on a coated wall surface. Primarily, these are quantities relevant to the morphology of a water drop. This is also the reason why Seno et al. paid attention to them. Seno et al. describe an interaction such that when a water drop is flat, the drop travels beneath dust to release it. However, the wettability by water can be considered to be related to the process of a moving water drop being spread on a film surface and, in this case, the interaction force at the interface between the rearward end of a water drop and the paint film is important.

Therefore, paying attention to the above-mentioned water dynamic rearward tension (Tr) as a parameter representing the water wettability, the present inventors made intensive investigations and, as a result, found that said water dynamic rearward tension (Tr) is significantly correlated with the raindrop-fouling resistance and that the water dynamic rearward tension (Tr) (abscissa) and the raindrop-fouling resistance (ordinate) show a linear relationship.

The water dynamic rearward tension (Tr) can be determined by the method of Kubo and Ueda (the Abstracts of Papers read at the 43rd Rheology Forum held by the Japan Rheology Society, page 233, 1995) using a measuring apparatus shown in Fig. 1. Thus, a test specimen 2 provided with a paint film in question is suspended from a load cell 1 mounted on the upper part of said measuring apparatus and a container 4 containing a test liquid 3 is placed on a support 5. The support 5 is then moved up and down to thereby immerse said test specimen 2 in said test liquid 3 or withdraw said specimen from the test liquid 3. On this occasion, the change in load F on test specimen 2 is determined.

When the weight of test specimen 2 before immersion thereof in test liquid 3 is taken as a basis, the load F on said test specimen 2 varies as shown in Fig. 3 during one cycle of measurement. In the figure, point A indicates the point of start of immersion as indicated by (a) in Fig. 2; point B indicates the point at which test specimen 2 overcomes the surface tension of test liquid 3 and begins to enter test liquid 3, as indicated by (b) in Fig. 2; and point C indicates the point of start of withdrawal of test specimen 2. Point Fg indicates the point where the placement is the same as point A.

The load at said point Fg corresponds to the water rearward tension (Fr). Using this value, the water dynamic rearward tension (Tr) can be calculated by the equation (xi) shown below.

$$Tr = (Fr - Fb)/P \qquad (xi)$$

where Fb is the buoyancy on test specimen 2 (it is equal to zero at point Fg) and P is the circumferential length (mm) of the immersed portion of test specimen 2.

Thus, the water dynamic rearward tension (Tr) can be measured by physical measurements alone without depending on any particular theoretical premises.

The present inventors found that the raindrop-fouling resistance can clearly be revealed in the region where the water dynamic rearward tension (Tr) is not less than 47 dyn/cm. When the water dynamic rearward tension (Tr) is less than 47 dyn/cm, the raindrop-fouling resistance is unsatisfactory, hence the above range is critical. It is desirable that said tension be not less than 56 dyn/cm, more preferably not less than 60 dyn/cm.

For causing the above water dynamic rearward tension (Tr) to be 47 dyn/cm or more, various methods are available, including, among others, (1) the method comprising causing film formation by adding a hydrophilic material or additive to a coating composition, (2) the method comprising applying a solution of a hydrophilic material or additive in an appropriate solvent to the film surface, (3) the method comprising finishing the paint film by forming a clear film thereon using a solution or dispersion of a hydrophilic material or additive in a film-forming resin compatible therewith and (4) the method comprising subjecting the film surface to physical and chemical treatment such as plasma treatment to thereby cause formation of hydrophilic groups. It is also possible to attain said water dynamic rearward tension (Tr) of not less than 47 dyn/cm by attaining a relative roughness of the film surface of not less than 1 μm.

The above methods (1) to (3) can provide the film surface with hydrophilic groups even when the hydrophilic material or additive is used in very small amounts, and the raindrop-fouling resistance increases as the addition level increases. However, when the level of addition of said hydrophilic material or additive exceeds a certain limit, the raindrop-fouling resistance reaches a point of saturation, hence it is desirable that the addition level be at most said limit.

As mentioned above, the raindrop-fouling resistance can be revealed when the water dynamic rearward tension (Tr) is not less than 47 dyn/cm. This correlation between the water dynamic rearward tension (Tr) and the raindrop-fouling resistance is independent of the coating composition morphology (powder coating, solution type coating, dispersion type coating), resin species constituting the coating composition, pigment species, and additive species, for instance. It is also independent of the curing mode of the paint film (baking, forced setting, cold setting, thermoplastic type, lacquer type). Therefore, it is possible to causing every kind of paint film to reveal the raindrop-fouling resistance when said water dynamic rearward tension (Tr) is not less than 47 dyn/cm.

The paint film for outside plates according to the second aspect of the present invention has a surface tension acidity term ($\gamma^+$) of not less than 0.01 mJ/m$^2$. When it is less than 0.01 mJ/m$^2$, no satisfactory resistance to fouling by rainwater containing acidic substances can be attained. Therefore, the above range is critical. It is desirable that said term be not less than 0.05 mJ/m$^2$.

The surface tension acidity term ($\gamma^+$) is calculated based on the theory of film surface tension mentioned below.

The surface tension ($\gamma_S$) of a film surface is derived from the surface tension ($\gamma_L$) of a liquid in contact with said film surface, the contact angle ($\theta$) of said liquid and the interfacial tension ($\gamma_{SL}$) between said film surface and said liquid, according to Young's equation, as follows:

$$\gamma_S = \gamma_L \cos\theta + \gamma_{SL} \qquad \text{(i)}$$

Using the adhesion work ($W_{SL}$) between the film surface and the liquid, the following equation is obtained:

$$\gamma_{SL} = \gamma_S + \gamma_L - W_{SL} \qquad \text{(ii)}$$

Further, according to F. M. Fowkes (Industrial and Engineering Chemistry, vol. 56, page 40, 1964), the adhesion work is given by the equation:

$$W_{SL} = 2(\gamma_S \cdot \gamma_L)^{1/2}$$

and, hence, the following equation can be derived from the above equation (ii):

$$\gamma_{SL} = \gamma_S + \gamma_L - 2(\gamma_S \cdot \gamma_L)^{1/2} \qquad \text{(iii)}$$

According to Hata et al. (Journal of the Japan Adhesion Society, vol. 8, page 131, 1972), the above equation (iii) holds for each of the dispersion force term, dipole interaction term and hydrogen bond term and, therefore, the dispersion force term (d) and dipole interaction term (p) can be expressed as follows:
Dispersion force term (d):

$$\gamma_{SL}{}^{d} = \gamma_S{}^{d} + \gamma_L{}^{d} - 2(\gamma_S{}^{d} \cdot \gamma_L{}^{d})^{1/2}$$

Dipole interaction term (p):

$$\gamma_{SL}{}^{p} = \gamma_S{}^{p} + \gamma_L{}^{p} - 2(\gamma_S{}^{p} \cdot \gamma_L{}^{p})^{1/2}$$

On the other hand, according to C. J. van Oss et al. (Journal of Protein Chemistry, vol. 4, page 245, 1985), the interfacial tension ($\gamma_{ij}$) between two adjacent phases (i) and (j) can be divided into a term based on the long range force ($\gamma^{LW}{}_{ij}$) and a term based on the short range force ($\gamma^{SR}{}_{ij}$). Thus,

$$\gamma_{ij} = \gamma^{LW}{}_{ij} + \gamma^{SR}{}_{ij} \quad \text{(iv)}$$

The above term based on the long range force ($\gamma^{LW}{}_{ij}$) is based on the van der Waals force comprising the dispersion force, dipole interaction force and Debye force, hence, citing the above equation (iii), the long range force ($\gamma^{LW}{}_{ij}$) can be expressed as follows:

$$\gamma^{LW}{}_{ij} = \gamma^{LW}{}_{i} + \gamma^{LW}{}_{j} - 2(\gamma^{LW}{}_{i} \cdot \gamma^{LW}{}_{j})^{1/2} \quad \text{(v)}$$

where $\gamma^{LW}{}_{i}$ is the surface tension of phase (i) in the long range force, and $\gamma^{LW}{}_{j}$ is the surface tension of phase (j) in the long range force.

Further, according to C. J. van Oss et al. (Journal of Colloid and Interface Science, vol. 111, page 378, 1986), the term based on said short term force ($\gamma^{SR}{}_{ij}$) mainly results from Lewis acid/Lewis base interaction and the following equations can be obtained:

$$\gamma^{SR}{}_{i} = 2(\gamma^{+}{}_{i} \cdot \gamma^{-}{}_{i})^{1/2} \quad \text{(vi-1)}$$

$$\gamma^{SR}{}_{j} = 2(\gamma^{+}{}_{j} \cdot \gamma^{-}{}_{j})^{1/2} \quad \text{(vi-2)}$$

where $\gamma^{SR}{}_{i}$ is the surface tension of phase (i) in the short range force, $\gamma^{SR}{}_{j}$ is the surface tension of phase (j) in the short range force, $\gamma^{+}{}_{i}$ is the acidity term of phase (i), $\gamma^{-}{}_{i}$ is the basicity term of phase (i), $\gamma^{+}{}_{j}$ is the acidity term of phase (j), and $\gamma^{-}{}_{j}$ is the basicity term of phase (j).

Here, in the above term based on the short range force ($\gamma^{SR}{}_{ij}$), the adhesion work ($W^{SR}{}_{ij}$) by the film phase (i) and contaminant phase (j) can generally be expressed as follows:

$$W^{SR}{}_{ij} = 2(\gamma^{SR}{}_{i} \cdot \gamma^{SR}{}_{j})^{1/2}$$

In said film phase (i) and said contaminant phase (j), Lewis acid/Lewis base interactions take place and either phase may have acidic sites and basic sites simultaneously. Considering that the acidic sites of film phase (i) and the basic sites of contaminant phase (j) as well as the basic sites of film phase (i) and the acidic sites of contaminant phase (j) are simultaneously involved in the interactions, said adhesion work can be expressed as follows:

$$W^{SR}{}_{ij} = 2(\gamma^{+}{}_{i} \cdot \gamma^{-}{}_{j})^{1/2} + 2(\gamma^{-}{}_{i} \cdot \gamma^{+}{}_{j})^{1/2} \quad \text{(viii)}$$

From the above equations (ii), (vi-1), (vi-2) and (vii), the following can be derived:

$$\gamma^{SR}{}_{ij} = 2(\gamma^{+}{}_{i} \cdot \gamma^{-}{}_{j})^{1/2} + 2(\gamma^{-}{}_{i} \cdot \gamma^{+}{}_{j})^{1/2} - 2(\gamma^{+}{}_{i} \cdot \gamma^{-}{}_{i})^{1/2} - 2(\gamma^{+}{}_{j} \cdot \gamma^{-}{}_{j})^{1/2} \quad \text{(viii)}$$

Further, from the above equations (iv), (v) and (viii), the following can be derived:

$$\gamma_{ij} = \gamma^{LW}_i + 2(\gamma^+_i \cdot \gamma^-_j)^{½} + \gamma^{LW}_j + 2(\gamma^+_j \cdot \gamma^-_i)^{½} - 2\{(\gamma^{LW}_i \cdot \gamma^{LW}_j)^{½} + (\gamma^+_i \cdot \gamma^-_j)^{½} + (\gamma^-_i \cdot \gamma^+_j)^{½}\} \quad (ix)$$

In cases where said contaminant phase (j) is a liquid, the following equation (x) can be derived from Young's equation (i) and the above equation (ix):

$$\{\gamma^{LW}_j + 2(\gamma^+_i \cdot \gamma^-_j)^{½}\}\,(1 + \cos\theta) = 2\{(\gamma^{LW}_j \cdot \gamma^{LW}_j)^{½} + (\gamma^+_i \cdot \gamma^-_j)^{½} + (\gamma^-_i \cdot \gamma^+_j)^{½}\} \quad (x).$$

The above equation is Young-Dupre's equation.

The above equation (x) contains three unknown quantities ($\gamma^{LW}_i$, $\gamma^+_i$, $\gamma^-_i$) relative to said film phase (i) and three unknown quantities ($\gamma^{LW}_j$, $\gamma^+_j$, $\gamma^-_j$) relative to said contaminant phase (j). The $\gamma^{LW}_i$, $\gamma^+_i$ and $\gamma^-_i$ relative to a specific film phase (i), however, can be determined by measuring the contact angle of a liquid for which the $\gamma^{LW}_j$, $\gamma^+_j$ and $\gamma^-_j$ of said contaminant phase (j) are known, and solving the simultaneous equations for the three unknowns ($\gamma^{LW}_j$, $\gamma^+_j$, $\gamma^-_j$). Said $\gamma^+_i$ obtained by solving said simultaneous equations is the acidity term ($\gamma^+$) of the surface tension of the paint film for outside plates.

As mentioned above in detail, the acidity term ($\gamma^+$) of the surface tension can be calculated based on the theory of surface tension.

Whereas the above-mentioned surface tension (7 ) and the nonpolarity term ($\gamma^{LW}$) thereof or the basicity term ($\gamma^-$) cannot explain any relation thereof to the resistance to fouling by acidic substance-containing rainwater, the acidity term ($\gamma^+$) shows a clear correspondence thereto; the resistance to fouling by acidic substance-containing rainwater becomes better as the value of the acidity term ($\gamma^+$) increases. This is clear from the fact that in cases where an organic polymer having at least one kind of alkoxysilyl group or a partial hydrolyzed condensate of an organosilicon compound is used, great differences are found in raindrop-fouling resistance even when the values first mentioned above show little differences. This will be explained later more concretely referring to Table 3.

When the acidity term ($\gamma^+$) of the surface tension is not less than 0.01 mJ/m$^2$, the raindrop-fouling resistance and the carbon-fouling resistance can be judged as satisfactory whereas when the acidity term ($\gamma^+$) of the surface tension is 0.05 mJ/m$^2$, the raindrop-fouling resistance and the carbon-fouling resistance become still better.

The paint film for outside plates according to the third aspect of the present invention has a water dynamic rearward tension (Tr) of not less than 47 dyn/cm and a surface tension acidity term ($\gamma^+$) of not less than 0.01 mJ/m$^2$. In this case, the paint film for outside plates has the hydrophilicity for water on a vertical or slant surface, which the paint film for outside plates according to the first aspect of the invention has, as well as the affinity for water containing acidic substances, which the paint film for outside plates according to the second aspect of the invention has, and therefore can realize good resistance to fouling by rainwater containing acidic substances. It is desirable that the water dynamic rearward tension (Tr) be not less than 56 dyn/cm and/or preferably and the surface tension acidity term ($\gamma^+$) be not less than 0.05 mJ/m$^2$.

It is desirable that the paint film for outside plates according to the first, second or third aspect of the present invention contain a film-forming resin and at least one of an organic polymer (I) having at least one kind of alkoxysilyl group of the general formula (1)

$$-Si(OR^1)_{3-n} \quad (1)$$

wherein $R^1$ represents hydrogen ; alkyl containing 1 to 11 carbon atoms; epoxyalkyl containing 2 to 11 carbon atoms; aryl containing 6 to 14 carbon atoms optionally substituted by at least one alkyl containing 1 to 8 (preferably 1 to 4) carbon atoms, the total number of carbon atoms in the said aryl being up to 14 ; aralkyl containing 1 to 5 carbon atoms in its alkyl part and 6 to 10 carbon atoms in its aryl part, said aryl part being optionally substituted by at least one alkyl containing 1 to 4 carbon atoms, the total number of carbon atoms in the said aralkyl being up to 11 ; or alkenyl containing 2 to 11 carbon atoms; n represents 0, 1 or 2, and a partial hydrolyzed condensate (II) available upon hydrolysis and subsequent condensation of an organosilicon compound of the following general formula (2):

$$R^2{}_m-Si(OR^3)_{4-m} \quad (2)$$

wherein $R^2$ represents alkyl containing 1 to 6 carbon atoms; epoxyalkyl containing 2 to 11 carbon atoms; aryl containing 6 to 14 carbon atoms optionally substituted by at least one alkyl containing 1 to 8 (preferably 1 yo 4) carbon atoms, the total number of carbon atoms in the said aryl being up to 14 ; or alkenyl containing 2 to 11 carbon atoms ; $R^3$

represents alkyl containing 1 to 6 carbon atoms ; and m represents 0, 1, 2 or 3, with a degree of hydrolysis of less than 100%.

Said organic polymer (I) contains at least one kind of alkoxysilyl group of the general formula (1) shown above, wherein $R^1$ represents hydrogen, alkyl containing 1 to 11 carbon atoms, epoxyalkyl containing 2 to 11 carbon atoms, aryl, aralkyl as defined above, or alkenyl containing 2 to 11 carbon atoms.

Said alkyl containing 1 to 11 carbon atoms is not limited to any particular species but includes, among others, methyl, ethyl, propyl, n-butyl, t-butyl and the like. Said epoxyalkyl containing 2 to 11 carbon atoms is not limited to any particular species but includes, among others, glycidoxypropyl, epoxycyclohexylethyl and the like. Said aryl is not limited to any particular species but includes, among others, phenyl, tolyl, naphthyl, phenanthryl... Said aralkyl is not limited to any particular soecies but includes, among others, benzyl, naphthylmethyl, methylbenzyl. Said alkenyl containing 2 to 11 carbon atoms is not limited to any particular species but includes, among others, vinyl, allyl, acryloyloxypropyl, methacryloyloxypropyl and the like. Among them, hydrogen and alkyl containing 1 or 2 carbon atoms are preferred because of rapid hydrolysis and less time-consuming hydrophilization. Methyl and ethyl is more preferred, and methyl is most preferred.

The alkoxysilyl group represented by the above general formula (1) is not limited to any particular species but includes, among others, trimethoxysilyl, triethoxysilyl, ethyldimethoxysilyl, methyldiethoxysilyl and the like. Among them, an alkoxysilyl group where n is 0 or 1 is preferred, and trimethoxysilyl is more preferred.

The skeleton of said organic polymer (I) is not particularly limited but includes, among others, an acrylic one and a silicone type one. Among them, the acrylic one is preferred. These may be modified by one or more other components.

The modification can be performed in the conventional manner by using a component or components for modification, for example a modifying monomer or modifying resin or the like suitably selected while taking into consideration the compatibility with the resin, solvent and other components in the coating composition to be admixed with the above organic polymer (I), the storage stability of the resulting coating composition, and other factors. As said modifying monomer or modifying resin, those for ordinary use in the conventional coating compositions may be used, among others.

The organic polymer (I) mentioned above preferably has an alkoxysilyl equivalent of 82.8 to 144. The alkoxysilyl equivalent is defined as the weight (g) of the organic polymer (I) per mole of alkoxysilyl group (SiOR group). The alkoxysilyl equivalent is preferably not very large. When it exceeds 144, the water wettability or raindrop-fouling resistance of the resulting paint film becomes insufficient. Said equivalent is more preferably within the range of 82.8 to 92.

In cases where said organic polymer (I) is a homopolymer composed of an alkoxysilyl-containing monomer alone, the alkoxysilyl equivalent is 82.8, and such polymer is most preferred. In cases where said organic polymer (I) is composed of said alkoxysilyl-containing monomer and other copolymerizable monomer, the water wettability and the raindrop-fouling resistance of the paint film can be controlled by adjusting the proportion of said alkoxysilyl-containing monomer.

It is desirable that said organic polymer (I) have a glass transition temperature (Tg) of -20 to 60°C. When it is below -20 °C, the resulting paint film becomes soft and weak. When it exceeds 60 °C, the film surface tends to be uneven and the resulting paint film tends to become too hard, readily allowing cracking.

Said organic polymer (I) preferably has a molecular weight of 3,000 to 30,000. When it is less than 3,000, the cracking resistance is insufficient. When it exceeds 30,000, the viscosity becomes too high, making the coating procedure difficult. A more preferred range is 5,000 to 20,000.

Said organic polymer (I) preferably has an acid value of less than 10 mg KOH/g. When it is not less than 10 mg KOH/g, the acidic groups contained in said organic polymer (I) tend to act as a catalyst for the hydrolysis of alkoxysilyl groups of said organic polymer (I) or the condensation reaction of silanol groups thereof, impairing the moisture curability under open air conditions and the stability (e.g. storage stability) of the coating composition and causing film cracking.

Said organic polymer (I) can be produced, for example, by introducing an alkoxysilyl group into an acrylic polymer. The alkoxysilyl group introduction can be performed by using said alkoxysilyl-containing monomer and a polymerizable unsaturated monomer and copolymerizing them with an acrylic monomer. On the occasion of said alkoxysilyl group introduction, an ethylenically unsaturated monomer may be added in addition to said acrylic monomer, if necessary.

Said alkoxysilyl-containing monomer is not limited to any particular species but includes, among others, vinylmethyldimethoxysilane, γ-acryloyloxypropylmethyldimethoxysilane, vinyltrimethoxysilane, γ-acryloyloxypropyltrimethoxysilane, γ-methacryloylpropylmethyldimethoxysilane, γ-methacryloyloxypropyltrimethoxysilane, γ-[(2-propen-2-yloxycarbonyl)benzoyloxy]propylmethyldimethoxysilane, γ-methacryloyloxypropylmethyldiethoxysilane, γ-methacryloyloxypropyltriethoxysilane and the like.

From the rate of hydrolysis reaction viewpoint, vinyltrimethoxysilane, γ-acryloyloxypropyltrimethoxysilane and γ-methacryloyloxypropyltrimethoxysilane are particularly preferred among others.

Commercial products of these are also available, for example KBM 502 (γ-methacryloylpropylmethyldimethoxysilane), KBM 503 (γ-methacryloyloxypropyltrimethoxysilane), KBE 502 (γ -methacryloyloxypropylmethyldiethoxysilane) and KBE 503 (γ-methacryloyloxypropyltriethoxysilane) (all available from Shin-Etsu Chemical), and they can suitably be used.

The proportion of said alkoxysilyl-containing monomer may suitably be selected as occasion demands. Generally, it is used in an amount of 90 to 100% by weight, more preferably 100% by weight, based on the sum total of all components constituting the organic polymer (I). An amount of less than 90% by weight unfavorably results in an excessively high alkoxysilyl equivalent.

In producing said organic polymer (I), various monomers may additionally be used for adjusting the physical properties of the paint film. Said monomer is not limited to any particular species but includes, among others, alkyl (meth) acrylates such as methyl (meth)acrylate, ethyl (meth)acrylate, propyl (meth)acrylate, n-butyl (meth)acrylate, i-butyl (meth)acrylate, t-butyl (meth)acrylate, 2-ethylhexyl (meth)acrylate and lauryl (meth)acryiate; aromatic vinyl compounds such as styrene and vinyltoluene; and vinyl compounds such as acrylonitrile, vinyl acetate, acrylic acid and methacrylic acid. These may be used singly or two or more of them may be used in combination.

For the purpose of providing the paint film with flexibility and increasing the processability for giving precoated metals (PCMs), soft segment-containing monomers such as ε -caprolactone-modified (meth)vinyl monomers are preferably used.

Some of such soft segment-containing monomers are commercially available. For example, 2-hydroxyethyl (meth) acrylate/ε-caprolactone adduct and polyalkyleneglycol mono(meth)acrylate are on the market as Placcel FA series and Placcel FM series monomers (products of Daicel Chemical Industries).

In addition to the above monomers, use may be made, as necessary, of amino-containing monomers and acrylamides such as dimethylaminoethyl (meth)acrylate, dimethylaminoethyl (meth)acrylate, (meth)acrylamide, α-ethyl (meth)acrylamide, N,N-butoxymethyl(meth)acrylamide and N-methylacrylamide; hydroxyalkyl (meth)acrylates such as 2-hydroxypropyl (meth)acrylate, 2-hydroxypropyl (meth)acrylate and 4-hydroxybutyl (meth)acrylate; and so forth.

Said partial hydrolyzed condensate (II) is obtained by hydrolyzing an organosilicon compound of the general formula (2) shown below, followed by condensation.

$$R^2{}_m\text{-Si}(OR^3)_{4-m} \qquad (2)$$

wherein $R^2$ represents alkyl containing 1 to 6 carbon atoms; epoxyalkyl containing 2 to 11 carbon atoms; aryl containing 6 to 14 carbon atoms optionally substituted by at least one alkyl containing 1 to 8 (preferably 1 yo 4) carbon atoms, the total number of carbon atoms in the said aryl being up to 14 ; or alkenyl containing 2 to 11 carbon atoms ; $R^3$ represents alkyl containing 1 to 6 carbon atoms ; and m represents 0, 1, 2 or 3.

Said alkyl containing 1 to 6 carbon atoms is not limited to any particular species but includes, among others, methyl, ethyl and propyl. Said epoxyalkyl containing 2 to 11 carbon atoms is not limited to any particular species but includes, among others, glycidoxypropyl and epoxycyclohexylethyl. Said aryl is not limited to any particular species but includes, among others, phenyl, tolyl, naphthyl, phenanthryl... Said alkenyl containing 2 to 11 carbon atoms is not limited to any particular species but includes, among others, vinyl, allyl, acryloyloxypropyl and methacryloyloxypropyl.

The organosilicon compound represented by the above general formula (2) is not limited to any particular species but includes, among others, tetrafunctional alkoxysilane compounds such as tetramethoxysilane, tetraethoxysilane, tetrapropoxysilane and tetrabutoxysilane; and trifunctional alkoxysilane compounds such as methyltrimethoxysilane, methyltriethoxysilane, ethyltrimethoxysilane, ethyltriethoxysilane, propyltrimethoxysilane, propyltriethoxysilane, benzyltrimethoxysilane, benzyltriethoxysilane, allyltrimethoxysilane and allyltriethoxysilane.

Among them, tetramethoxysilane, tetraethoxysilane, methyltriethoxysilane and ethyltriethoxysilane are preferred because the hydrolysis and condensation reactions are retarded when the number of carbon atoms in the substituent $R^2$ is too large. More preferred is tetramethoxysilane. By using tetramethoxysilane, the hardness, acid resistance and alkali resistance of the paint film available on curing of the partial hydrolyzed condensate (II) with a polyol resin and a blocked isocyanate curing agent can be improved.

The partial hydrolyzed condensate (II) of the above organosilicon compound can be obtained by a conventional method. For example, the partial hydrolyzed condensate (II) can be obtained by adding a required amount of water and a catalyst to said organosilicon compound and removing the alcohol resulting from the hydrolysis and condensation reactions. It can also be obtained by preparing an oligomer which is a condensate of the above organosilicon compound, and then subjecting said oligomer to reaction.

The partial hydrolyzed condensate (II) obtained in the above manner contains organosilicon compounds not involved in the condensation reaction. It is desirable that such organosilicon compounds be removed. The residual content of said organosilicon compounds in said partial hydrolyzed condensate (II) after treatment for removal should preferably be not more than 1% by weight, more preferably not more than 0.3% by weight. The method of removal of said organosilicon compounds is not critical but any conventional method may be employed.

When the partial hydrolyzed condensate (II) contains said organosilicon compounds, said partial hydrolyzed condensate (II) itself or the resulting coating composition may sometimes have decreased storage stability and, furthermore, the paint film formed from said coating composition may unfavorably show decreases in performance characteristics such as water resistance, acid resistance, alkali resistance and film cracking.

The amount of water to be used in preparing the partial hydrolyzed condensate (II) is determined based on the desired degree of hydrolysis. Generally, the degree of hydrolysis is 0 to 100%. If a tetraalkoxysilane is used as the organosilicon compound, for instance, the hydrolysis reaction may be represented as follows:

$$Si(OR)_4 + aH_2O \rightarrow Si(OR)_{4-2a}O_a + 2aROH$$

and the degree of hydrolysis may be calculated as follows:

$$\text{Degree of hydrolysis (\%)} = (2a/4) \times 100$$

In that case, if all alkoxysilyl groups are hydrolyzed, the degree of hydrolysis will be 100%; if two alkoxysilyl groups are hydrolyzed, the degree of hydrolysis will be 50%. In the same manner, if all hydrolyzable alkoxysilyl groups in the above-mentioned organosilicon compound of general formula (2) and an oligomer thereof are hydrolyzed, the degree of hydrolysis will be 100%; if the alkoxysilyl groups are partially hydrolyzed, the degree of hydrolysis may be expressed in terms of percentage of hydrolyzed alkoxysilyl groups relative to all hydrolyzable alkoxysilyl groups.

When said degree of hydrolysis is 100%, the hydrolyzate is solid $SiO_2$. When said degree is 70 to 100%, the hydrolyzate will occur as a gelatin-like gel or a solid; when 65 to 70%, the hydrolyzate is high in viscosity and readily reacts with atmospheric moisture of slight amounts, resulting in gelation, hence have poor storage stability and is very difficult to handle.

It is desirable that the above-mentioned partial hydrolyzed condensate (II) have the degree of hydrolysis of less than 100%. When the organosilicon compound is tetramethoxysilane, the degree of hydrolysis is preferably 0 to 65%, Within this range, a linear condensation product can be obtained. A range of 10 to 65% is more preferred and a range of 30 to 60% is most preferred.

Some partial hydrolyzed condensates derived from said tetramethoxysilane are commercially available, for example MKC Silicate MS51 (degree of hydrolysis about 40%, $SiO_2$ content about 52%, product of Mitsubishi Chemical Corp.) and MKC Silicate MS56 (degree of hydrolysis about 50%, $SiO_2$ content about 56%, product of Mitsubishi Chemical Corp.).

The above partial hydrolyzed condensates of the tetramethoxysilane have SiOH groups and SiOMe groups as functional groups (Me being methyl). The mole ratio between said SiOH groups and SiOMe groups is preferably SiOH groups/SiOMe groups = 1/10 or less. When SiOH are present abundantly, they readily react with hydroxyl groups occurring in the polyol resin, so that such reaction may occur during storage of coating compositions, causing troubles such as viscosity increase and gelation, although paint films having high hardness may be obtained. It is more desirable that SiOMe groups account for all substituents. As examples which meet such requirement, there may be mentioned, for example, MKC Silicate MS51 and MKC Silicate MS56 (products of Mitsubishi Chemical). Those containing SiOH groups abundantly are preferably incorporated in hydroxyl-free coating compositions, for example thermoplastic coating compositions based on a polyfluorovinylidene (PVF)-based fluororesin, not in polyol resins.

When the organosilicon compound is tetraethoxysilane, the partial hydrolyzed condensate of the tetraethoxysilane preferably has a $SiO_2$ content of about 40%. When the degree of hydrolysis is 65% or below, the partial hydrolyzed condensate of the tetraethoxysilane tends to be linear.

Some partial hydrolyzed condensates of the tetraethoxysilane are available on the market, for example Silicate 40 (product of Tama Chemical), TES 40 (product of Hoechst), Silbond 40 (product of Stauffer), Ethyl Silicate 40 (product of Union Carbide), etc.

The commercially available partial hydrolyzed condensates of the tetraethoxysilane are oligomers, in which the monomer, dimer, trimer and other oligomers are mixedly present. Those containing the monomer and like low-molecular-weight components may lead to decreases in storage stability of coating compositions containing them. Furthermore, said coating compositions give paint films with decreases in performance characteristics such as water resistance, acid resistance, alkali resistance and film cracking. It is therefore desirable that those containing low-molecular-weight components in small proportions be selected.

When those products containing low-molecular-weight components as mentioned above are used, it is desirable, to avoid the above problems, that the medium used in carrying out the hydrolysis and condensation reactions, for example an organic solvent such as an alcohol, be not removed after completion of the reactions and the partial hydrolyzes condensate be used in a diluted state. Those containing low-molecular-weight components may be subjected to further hydrolysis and condensation to give improved partial hydrolyzed condensates. When diluted with such organic solvent, the partial hydrolyzed condensate of the tetraethoxysilane preferably has a degree of hydrolysis of 20 to 80%. When said degree is below 20%, the monomer tends to remain. When said degree is above 80%, the partial hydrolyzed condensate obtained has poor stability.

The water to be used in hydrolyzing the organosilicon compound is not limited to any particular species. It is desirable, however, to use deionized water, pure water or ultra pure water depending on the desired performance characteristics of paint films, since the presence of ions and other impurities in paint films may lead to decreases in performance characteristics of the paint films.

In carrying out the above hydrolysis, a catalyst may be used as necessary. The catalyst is not limited to any particular species but includes, among others, inorganic acids such as hydrochloric acid, sulfuric acid, nitric acid and phosphoric acid; monocarboxylic acids such as formic acid, acetic acid, propionic acid and benzoic acid; dicarboxylic acids such as oxalic acid, phthalic acid and maleic acid; p-toluenesulfonic acid and like organic acids; bases such as ammonia, amines and sodium hydroxide; organometals; metal alkoxides; organotin compounds such as dibutyltin dilaurate, dibutyltin dioctoate and dibutyltin diacetate; metal chelate compounds such as aluminum tris(acetylacetonate), titanium tetrakis(acetylacetonate), titanium bis(acetylacetonate), titanium bis(butoxy)bis(acetylacetonate), zirconium bis(butoxy)bis(acetylacetonate) and zirconium bis(isopropoxy) bis(acetylacetonate); boron compounds such as boron butoxide and boric acid; and so forth. These may be used singly or two or more of them may be used combinedly.

From the viewpoint of storage stability of the partial hydrolyzed condensate (II) obtained and of the resulting coating composition, at least one member selected from among carboxylic acids, metel chelate compounds and boron compounds is preferably used.

The level of addition of said catalyst is not critical but, generally, said catalyst is used in an amount of 0.1 to 10 parts by weight, preferably 0.5 to 5 parts by weight, per 100 parts by weight of silane monomer.

The above-mentioned film-forming resin is not limited to any particular species but those film-forming resins (A) mentioned later herein in detail can suitably be used.

The paint film for outside plates according to the first, second or third aspect of the present invention comprises a film-forming resin and at least one of the organic polymer (I) mentioned above and the partial hydrolyzed condensate (II) mentioned above, with said at least one of the above-mentioned organic polymer (I) and partial hydrolyzed condensate (II) being held on the film surface. The method of holding at least one of the organic polymer (I) and partial hydrolyzed condensate (II) on said surface is not critical provided that at least one of the requirements that the water dynamic rearward tension (Tr) be not less than 47 dyn/cm and that the surface tension acidity term ($\gamma^+$) be not less than 0.01 mJ/m$^2$ be satisfied. Thus, for instance, there may be mentioned the method comprising adding at least one of the organic polymer (I) and partial hydrolyzed condensate (II) as an additive to a coating composition and the method comprising admixing at least one of the organic polymer (I) and partial hydrolyzed condensate (II) as part of a binder with a coating composition.

The coating composition according to the fourth aspect of the present invention is a coating composition for providing the above-mentioned paint film for outside plates and contains a film-forming resin (A) and at least one of an organic polymer (I) having at least one kind of alkoxysilyl group of the general formula (1)

$$-Si(OR^1)_{3-n} \quad (1)$$

wherein $R^1$ represents hydrogen ; alkyl containing 1 to 11 carbon atoms; epoxyalkyl containing 2 to 11 carbon atoms; aryl containing 6 to 14 carbon atoms optionally substituted by at least one alkyl containing 1 to 8 (preferably 1 to 4) carbon atoms, the total number of carbon atoms in the said aryl being up to 14 ; aralkyl containing 1 to 5 carbon atoms in its alkyl part and 6 to 10 carbon atoms in its aryl part, said aryl part being optionally substituted by at least one alkyl containing 1 to 4 carbon atoms, the total number of carbon atoms in the said aralkyl being up to 11 ; or alkenyl containing 2 to 11 carbon atoms; n represents 0, 1 or 2, and a partial hydrolyzed condensate (II) available upon hydrolysis and subsequent condensation of an organosilicon compound of the following general formula (2):

$$R^2{}_m-Si(OR^3)_{4-m} \quad (2)$$

wherein $R^2$ represents alkyl containing 1 to 6 carbon atoms; epoxyalkyl containing 2 to 11 carbon atoms; aryl containing 6 to 14 carbon atoms optionally substituted by at least one alkyl containing 1 to 8 (preferably 1 to 4) carbon atoms, the total number of carbon atoms in the said aryl being up to 14 ; or alkenyl containing 2 to 11 carbon atoms ; $R^3$ represents alkyl containing 1 to 6 carbon atoms; and m represents 0,1,2 or 3, with a degree of hydrolysis of less than 100%.

Said film-forming resin (A) is not limited to any particular species but may be any of thermoplastic resins, thermosetting resins and cold-setting resins. In the practice of the fourth aspect of the present invention, however, said resin is admixed with the organic polymer (I) and/or the partial hydrolyzed condensate (II) and, therefore, it is preferably a thermoplastic resin which require no curing catalyst. This is because, for instance, the organic polymer (I) and the partial hydrolyzed condensate (II), which contain alkoxysilyl groups as mentioned above, when allowed to coexist with a catalyst used in the coating composition, such as an acid or a tin compound, undergo, upon invasion of water, hydrolysis and condensation reactions of alkoxysilyl groups, whereby the storage stability of the coating composition is impaired. When a thermosetting resin or cold-setting resin is used as said film-forming resin (A), it is recommended that the coating composition take the two package form, with the organic polymer (I) and partial hydrolyzed condensate (II) and the catalyst component being separated from each other.

Said thermoplastic resin is not limited to any particular species but includes, among others, polyfluorovinylidene, copolymers of polyfluorovinylidene and an acrylic resin, mixtures of polyfluorovinylidene and an acrylic resin, and plastisols.

Although said thermosetting resin is not limited to any particular species, a polyol resin (a) is preferred and a curing agent (b) capable of reacting with the former is combinedly used.

Said polyol resin (a) preferably has a hydroxyl value of 5 to 300. When the hydroxyl value is below 5, the quantity of reactive groups is too small, hence the curability is low. When said value exceeds 300, hydrophilic groups remain in the paint film obtained upon curing, hence the water resistance, acid resistance and alkali resistance of the film decreases. A more preferred range is 30 to 200.

Said polyol resin (a) preferably has a number average molecular weight of 500 to 20,000. When the number average molecular weight is less than 500, the mechanical strength of the paint film obtained is insufficient. When, conversely, it exceeds 20,000, the viscosity of the coating composition becomes excessively high, resulting in decreased coatability. A more preferred range is 1,800 to 20,000.

Said polyol resin (a) is not limited to any particular species but includes, among others, acrylic polyol resins, polyester polyol resins, fluorinated polyol resins, and silicone polyol resins. These may be used singly or two or more of them may be used combinedly.

The above-mentioned acrylic polyol resins can be obtained by copolymerizing a hydroxyl-containing acrylic monomer and other ethylenically unsaturated monomer in the conventional manner. Said hydroxyl-containing acrylic monomer is not limited to any particular species but includes, among others, hydroxyalkyl (meth)acrylates such as 2-hydroxyethyl (meth) acrylate, 2-hydroxypropyl (meth)acrylate, 4-hydroxybutyl (meth)acrylate and the like.

The monomer copolymerizable with said hydroxyl-containing acrylic monomer is not limited to any particular species but includes, among others, those monomers specifically mentioned above for use in adjusting the physical properties of the paint film.

Said acrylic polyol resins may be introduced alkoxysilyl groups as necessary. The introduction of alkoxysilyl groups can be effected by copolymerizing an alkoxysilyl-containing acrylic monomer with another ethylenically unsaturated monomer.

The above-mentioned polyester polyol resins are polycondensates derived from an acid component mainly comprising a polybasic carboxylic acid and an alcohol component mainly comprising a polyhydric alcohol.

Said acid component is not limited to any particular species but includes, among others, aromatic dicarboxylic acids, such as terephthalic acid, isophthalic acid, phthalic acid, 2,6-naphthalenedicarboxylic acid and 2,7-naphthalenedicarboxylic acid, and anhydrides thereof; aliphatic dicarboxylic acids such as succinic acid, adipic acid, azelaic acid, sebacic acid, dodecanedicarboxylic acid and 1,4-cyclohexanedicarboxylic acid; and so forth.

In addition to those mentioned above, trace components may be contained, for example lactones such as 7 -butyrolactone and ε-caprolactone, and hydroxy carboxylic acids corresponding thereto; aromatic hydroxymonocarboxylic acids such as p-hydroxyethoxy benzoic acid; at least tribasic polycarboxylic acids such as trimellitic acid, trimesic acid and pyromellitic acid; and so on.

Said alcohol component is not limited to any particular species but includes, among others, ethylene glycol, 1,3-propanediol, 1,4-butanediol, 1,5-pentanediol, 1,5-hexanediol, diethylene glycol, triethylene glycol, 1,4-cyclohexanediol, 1,4-cyclohexanedimethanol, bisphenol A-alkylene oxide adducts, bisphenol S-alkylene oxide adducts; and side chain-containing aliphaticglycols such as 1,2-propanediol, neopentylglycol, 1,2-pentanediol, 2,3-pentanediol, 1,4-pentanediol, 1,4-hexanediol, 2,5-hexanediol, 3-methyl-1,5-pentanediol, 1,2-dodecanediol and 1,2-octadecanediol; and so forth.

In addition to those mentioned above, trace components such as at least trihydric polyols, for example trimethylolpropane, glycerol and pentaerythritol, may be used

When necessary, some other appropriate component, for example a silicone component or acrylic component, may be bound to the above-mentioned polyester polyol resins. The silicone component introduction can be realized, for example by using a hydroxyalkyl-containing (poly)siloxane as the alcohol component and subjecting the same to ordinary condensation reaction with the acid component mentioned above.

The above-mentioned fluorinated polyol resins are products obtained by copolymerizing a hydroxyl-containing, radical-polymerizable unsaturated monomer with a fluoroolefin monomer, if necessary further with some other radical-polymerizable unsaturated monomer, or products obtained by admixing a hydroxyl-free fluorinated polymer resulting from polymerization of a fluoroolefin monomer alone or of a fluoroolefin monomer and some other radical-polymerizable unsaturated monomer with an acrylic polyol resin.

Said hydroxyl-containing, radical-polymerizable unsaturated monomer is not limited to any particular species but includes, among others, hydroxyalkyl vinyl ethers such as hydroxyethyl vinyl ether, hydroxypropyl vinyl ether, hydroxybutyl vinyl ether and hydroxypentyl vinyl ether; hydroxyl-containing allyl ethers such as ethylene glycol monoallyl ether, diethylene glycol monoallyl ether and triethylene glycol monoallyl ether; and so forth.

Said fluoroolefin monomer includes difluorinated olefin monomers, trifluorinated olefin monomers and tetrafluorinated olefin monomers. More specifically, there may be mentioned vinyl fluoride, vinylidene fluoride, trifluorochloroethylene, tetrafluoroethylene and the like.

Said other radical-polymerizable unsaturated monomer is not limited to any particular species but may be adequately selected from among various known monomers depending on the physical properties required of the paint film. As such monomers, there may be mentioned, for example, a -olefins such as ethylene, propylene and isobutylene; vinyl ethers such as ethyl vinyl ether, isobutyl vinyl ether, butyl vinyl ether and cyclohexyl vinyl ether; fatty acid esters such as vinyl acetate, vinyl lactate, vinyl butyrate, vinyl isobutyrate, vinyl caproate, vinyl caprylate and isopropenyl fatty acid esters; and so forth.

Of the fluorinated polyol resins and fluororesins mentioned above, some are commercially available, for example of the difluorinated polyfluorovinylidene (PVDF) type, trifluorinated fluoroethylene vinyl ether copolymer (FEVE) type or tetrafluorinated FEVE type. Thus, for example, Kynar 500 (product of Elf Atochem) may be used as the difluorinated PVDF type one. This contains no hydroxyl group and therefore is used in admixture with a hydroxyl-containing acrylic polyol resin. As for the trifluorinated FEVE type, Lumiflon series (products of Asahi Glass) and Ceflal-Coat series (products of Central Glass) may be used. Xeflue series (products of Daikin Industries), among others, may be used as the tetrafluorinated FEVE type. Furthermore, Coatax (product of Toray Industries) and the like may be used as the so-called fluorinated acrylic resin.

As the above-mentioned silicone polyol resin, those represented by the general formula (3)

$$R^{i}_{x} \cdot R^{j}_{y} \cdot SiO_{(4-X-Y)/2} \qquad (3)$$

wherein $R^i$ represents hydrogen, methyl, alkoxyl or aryl containing 1 to 20 carbon atoms, aryloxy, or an organic group containing an ester, ether, urethane or carbon-carbon unsaturated bond within its chain containing 2 to 100 carbon atoms; $R^j$ represents a hydroxyl-containing organic group containing an ester, ether, urethane or carbon-carbon unsaturated bond within its chain containing 2 to 100 carbon atoms; x and y are positive integers satisfying the conditions: $0 < x < 4$, $0 < y < 4$ and $2 \leqq x + y < 4$), such as described in Japanese Kokoku Publication Hei-02-61481 may be used among others.

Said silicone polyol resin preferably has a number average molecular weight of 200 to 100,000. When it is less than 200, the cured film does not become hard and the performance characteristics is not revealed. When it exceeds 100,000, the resulting coating composition has an excessively high viscosity, decreasing the workability in coating, for example spray coating. A more preferred range is 500 to 20,000.

Said silicone polyol resin preferably has a hydroxyl value of 20 to 300. When it is below 20, it does not react with the curing agent to a sufficient extent, failing to show sufficient surface curability, whereby the mechanical properties of the surface become poor. When it exceeds 300, the compatibility with the hydroxyl-containing resin or crosslinking agent decreases and no satisfactory cured film can be obtained. A more preferred range is 30 to 200.

Said silicone polyol resin is used in combination with other polyol resin. Said other polyol resin is not limited to any particular species provided that it contain hydroxyl groups and has a hydroxyl value of 5 to 300, preferably 30 to 200. It includes, for example, the acrylic polyol resins mentioned above, polyester polyol resins, acryl-modified alkyd resins, acryl-modified polyester resins, epoxy resins derived from bisphenol A and epichlorohydrin, and the like.

Said other polyol resin may be admixed with said silicone polyol resin on the occasion of use, and in whole or in part be reacted in advance with said silicone polyol resin. The reaction with said silicone polyol resin may be carried out, for example, by the method comprising reacting a hydroxyalkyl-containing trisiloxane with a compound having an unsaturated double bond and a functional group other than hydroxyl, for example maleic anhydride, to thereby realize incorporation of the unsaturated double bond-containing component, and then subjecting said unsaturated double bond to addition polymerization with the unsaturated bond of an acrylic monomer or vinyl monomer.

The mixing ratio between said silicone polyol resin and said other polyol resin is preferably such that the silicone polyol resin accounts for 3 to 70 parts by weight and the other polyol resin for 97 to 30 parts by weight. When the amount of the silicone polyol resin is smaller than 3 parts by weight, the silicone-due weather resistance, chemical resistance and other characteristics can not be attained to the full. Conversely when it exceeds 70 parts by weight, the compatibility of the resins decreases.

The curing agent (b) capable of reacting with the above-mentioned polyol resin (a) is not limited to any particular species but may be an isocyanate compound, a blocked isocyanate compound, an amino resin or the like.

Said isocyanate compound is not limited to any particular species provided that it has two isocyanate groups per molecule. Thus, as examples, there may be mentioned aliphatic diisocyanates such as hexamethylene diisocyanate (HMDI) and trimethylhexamethylene diisocyanate (TMDI); alicyclic diisocyanates such as isophorone diisocyanate (IPDI); aromatic-aliphatic diisocyanates such as xylylene diisocyanate (XDI); aromatic diisocyanates such as tolylene diisocyanate (TDI) and 4,4'-diphenylmethane diisocyanate (MDI); dimer acid diisocyanate (DDI), hydrogenated TDI (HTDI), hydrogenated XDI (H6 XDI), hydrogenated MDI (H12 MDI) and like hydrogenated diisocyanates; polymeric polyisocyanates, for example dimers, trimers, tetramers and so on, derived from the diisocyanates mentioned above; adducts of these with a polyhydric alcohol such as trimethylolpropane, water or a low-molecular-weight polyester resin; and the like.

The above-mentioned isocyanate compounds are generally used in the form of blocked isocyanate compounds derived by blocking the reactive groups with an appropriate blocking agent so that the stability of the resulting coating compositions can be increased. Said blocking agent is not limited to any particular species but includes, among others, oxime-type blocking agents such as methyl ethyl ketoxime, acetoxime, cyclohexanone oxime, acetophenone oxime and benzophenone oxime; phenol-type blocking agents such as m-cresol and xylenol; alcohol-type blocking agents such as methanol, ethanol, butanol, 2-ethylhexanol, cyclohexanol and ethylene glycol monoethyl ether; lactam-type blocking agents such as ε-caprolactam; diketone-type blocking agents such as diethyl malonate and acetoacetate esters; mercaptan-type blocking agents such as thiophenol; urea-type blocking agents such as thiourea; imidazole-type blocking agents; and carbamic acid-type blocking agents. Among them, lactam-type, oxime-type, alcohol-type and diketone-type blocking agents are preferred.

Said blocked isocyanate compounds are prepared in the conventional manner by reacting the above isocyanate compounds with the above blocking agent until disappearance of the free isocyanate groups. Some are commercially available.

For example, Desmodur series (products of Sumitomo Bayer Urethane), Burnock D series (products of Dainippon Ink & Chemicals), Takenate B series (products of Takeda Chemical Industries) and Coronate 2500 series (products of Nippon Polyurethane Industry) can be used.

The above blocked isocyanate compounds are used in an amount sufficient to provide isocyanate groups in a quantity not less than the equivalent relative to the hydroxyl value of the above-mentioned polyol resin (a), generally in an amount of 0.8 to 1.5 times the equivalent. When the amount is too small, the curability is low, hence only a soft and weak paint film can be obtained and not only the hardness but also the chemical resistance and fouling resistance decrease. When, on the contrary, said amount is excessive, the effects corresponding to the addition level can hardly be obtained and, in addition, because of the addition of a large amount of the isocyanate compound or blocked isocyanate compound, the strength, hardness, processability and other physical properties of the paint film as designed based on the physical properties of the polyol resin (a) decrease and the chemical resistance decreases as well. Furthermore, the yellowing resistance and weather resistance of the paint film tends to decrease. A more preferred range is 1.0 to 1.2 times the equivalent.

In cases where an isocyanate compound or blocked isocyanate compound such as mentioned above is used as the curing agent (b), it is desirable to use a known tin compound such as dibutyltin dilaurate as a catalyst.

The above-mentioned amino resin is not limited to any particular species but includes, among others, melamine resins, guanamine resins, glycoluryl resins and urea resins. Said melamine resins may be classified into high imino type alkyl etherified melamines, methylol type alkyl etherified melamines, alkyl etherified melamines, mixed alkyl etherified melamines and so forth, all of which can be used. Suitable ones can be selected based on the baking temperature and the physical properties of the paint film. Since, however, imino- or methylol-containing ones generally cause decreases in water resistance, alkyl etherified melamines and mixed alkyl etherified melamines are preferred from the viewpoint of water resistance of paint films.

Said alkyl etherified melamines include methylated melamine, butylated melamine and methyl/butyl mixed etherified melamines. As commercial products of said methylated melamine, there may be mentioned, for example, Cymel 238 with a methoxy/isobutoxy mole ratio of 60/40, Cymel 235 with a methoxy/butoxy mole ratio of 60/40, Cymel 231 with a methoxy/butoxy mole ratio of 65/35, Cymel 236 with a methoxy/butoxy mole ratio of 40/60, Cymel 266 and 267 with a methoxy/butoxy mole ratio of 70/30 (products of Mitsui Cytec); Sumimal 50B(product of Sumitomo Chemical) and so forth.

As commercial products of said butylated melamine, there may be mentioned, for example, Micoat 506 (product of Mitsui Cytec), U-van 20SE (product of Mitsui Toatsu Chemicals) and U-Van 20N-60 (product of Mitsui Toatsu Chemicals).

As commercial products of said methylated melamine, there may be mentioned, for example, Cymel 303 (product of Mitsui Cytec), Sumimal M30W, M40S and M50W (products of Sumitomo Chemical), and Melan 622 and 623 (products of Hitachi Chemical).

As said guanamine resins, there may be mentioned commercial products such as Cymel 1123 and 1128 and Micoat 105 (benzoguanamine resin, product of Mitsui Cytec), among others.

As said glycoluryl resins, there may be mentioned commercial products such as Cymel 1170, 1171 and 1172 (products of Mitsui Cytec), among others.

As said urea reins, there may be mentioned commercial products such as UFR 65 and 300 (products of Mitsui Cytec), for instance.

Said amino resins are used in an amount sufficient to provide alkoxyl groups at least equivalent to the hydroxyl value of the polyol resin (a), generally in a polyol resin (a) / amino resin weight ratio of 9/1 to 5/5, preferably 8/2 to 6/4.

In cases where such an amino resin is used as the curing agent (b), an acid catalyst is generally required. Said acid catalyst is not limited to any particular species but includes, for example, aromatic sulfonic acids, such as dodecylbenzenesulfonic acid, p-toluenesulfonic acid and dinonylnaphthalenesulfonic acid, and salts thereof; organic phosphate salts; organic phosphonate salts; and the like. Preferred counter cations to these acid catalysts are amines.

The addition level of said acid catalyst is generally 0.5 to 3 parts by weight per 100 parts by weight of the sum total of said polyol resin (a) plus curing agent (b). At an addition level below 0.5 part by weight, the curability is low, hence only a soft and weak paint film is obtained and not only the hardness but also the chemical resistance and fouling resistance are low. At a level exceeding 3 parts by weight, the effect obtained no longer corresponds to the addition level.

The coating composition according to the fourth aspect of the present invention comprises the above-mentioned film-forming resin (A) and at least one of the above-mentioned organic polymer (I) and partial hydrolyzed condensate (II). Said organic polymer (I) and partial hydrolyzed condensate (II) have already been described in detail with respect to the first to third aspect of the invention.

Said organic polymer (I) is preferably used in an amount of 0.5 to 50 parts by weight per 100 parts by weight of the solids in the coating composition containing said film-forming resin (A). An amount smaller than 0.5 part by weight will fail to cause the paint film obtained to show water wettability, hence to show raindrop-fouling resistance. An amount exceeding 50 parts by weight leads to saturation of the water wettability and raindrop-fouling resistance. A more preferred range is 1 to 10 parts by weight.

The partial hydrolyzed condensate (II) is preferably incorporated in an amount of 1 to 300 parts by weight per 100 parts by weight of the solids in the coating composition containing said film-forming resin (A). An amount smaller than 1 part by weight will fail to cause the paint film obtained to show water wettability, hence to show raindrop-fouling resistance. An amount exceeding 300 parts by weight leads to saturation of the water wettability and the raindrop-fouling resistance. A more preferred range is 1 to 10 parts by weight. When said partial hydrolyzed condensate (II) is a partial hydrolyzed condensate derived from the tetraalkoxysilane, it is preferably used in an amount of 5 to 50 parts by weight per 100 parts by weight of the solids in the coating composition containing said film-forming resin (A).

In cases where both the organic polymer (I) and partial hydrolyzed condensate (II) are used, they are preferably used in a total amount of 1 to 10 parts by weight per 100 parts by weight of the solids in the coating composition containing said film-forming resin (A).

The coating composition according to the fourth aspect of the invention may further contain, as necessary, a pigment, one or more other additives, an organic solvent and so on. Said pigment is not limited to any particular species but includes, among others, color pigments such as titanium dioxide, carbon black, iron oxide, various calcined pigments, cyanine blue and cyanine gray; body pigments such as calcium carbonate, clay and barium sulfate; and so on.

Said other additives are not limited to any particular species but includes, among others, metal powders such as aluminum powder; flatting agents such as silica and alumina; antifoams; leveling agents; antisagging agents; surface modifiers; viscosity modifiers; dispersants; ultraviolet absorbers; waxes; and other conventional additives.

Said organic solvent is not limited to any particular species provided that it is generally used in coating compositions. Thus, there may be mentioned, for example, aromatic hydrocarbons such as toluene, xylene, Solvesso 100 and Solvesso 150; esters such as ethyl acetate and butyl acetate; ketones such as methyl ethyl ketone, methyl isobutyl ketone, cyclohexanone and isophorone; alcohol such as butanol, octanol and diacetone alcohol; and glycol derivatives such as ethylene glycol monomethyl ether, ethylene glycol monobutyl ether, ethylene glycol monoethyl ether, diethylene glycol monoethyl ether, propylene glycol monomethyl ether, propylene glycol monoethyl ether, propylene glycol monobutyl ether, ethylene glycol monoethyl ether acetate, ethylene glycol monomethyl ether acetate and propylene glycol monoethyl ether acetate. Suitable ones can be selected depending on the solubility, evaporation rate, safety and other factors.

The coating composition according to the fourth aspect of the present invention can be produced in the following manner.

A pigment dispersion paste is first prepared using an apparatus generally used for dispersing pigments, for example a roller mill, paint shaker, pot mill, Disper homogenizer or bead mill. A pigment paste is then prepared by adding thereto the above-mentioned film-forming resin (A), various additives, organic solvent, curing agent, catalyst and so on.

Thereafter, a varnish prepared separately from the organic polymer (I) and/or partial hydrolyzed condensate (II) is admixed with said pigment paste, whereupon the desired coating composition is obtained.

Such coating composition can also be obtained by preparing a resin composition which contains neither the organic polymer (I) nor the partial hydrolyzed condensate (II) and then adding the organic polymer (I) or partial hydrolyzed condensate (II), followed by homogenizing.

The film forming method according to the fifth aspect of the present invention comprises coating a substrate with at least one primer selected from the group consisting of an epoxy resin-based primer, polyurethane-modified epoxy resin-based primer and polyester resin-based primer and then with the coating composition according to the fourth aspect of the invention, followed by baking.

Said substrate is not limited to any particular species but includes, among others, galvanized steel sheets, alloyed galvanized steel sheets, zinc/aluminum plated steel sheets, aluminum-plated steel sheets, plates or sheets made of aluminum or alloys thereof, copper or alloys thereof, titanium or alloys thereof, vapor-deposited metals, stainless steel plates, cold rolled steel plates and other metallic materials; shaped articles made of these metallic materials; organic materials such as plastics; composite plastic materials such as fiber-reinforced plastics (FRPs); inorganic materials such as artificial marble and slate; and so forth.

When said substrate is a metallic material such as mentioned above, it is generally desirable to use one the surface of which has been treated by zinc phosphating, reaction type chromating, coat type chromating or the like. The chromated surface may further be provided with a thin film type organic composite coating.

According to the film forming method according to the fifth aspect of the invention, the above substrate is coated with a primer and then with the above-mentioned coating composition. Said primer is at least one member selected from the group consisting of an epoxy resin-based primer, polyurethane-modified epoxy resin-based primer and polyester resin-based primer.

Said coating composition provides a paint film such that the water dynamic rearward tension (Tr) is not less than 47 dyn/cm or the surface tension acidity term ($\gamma^+$) is not less than 0.01 mJ/m$^2$ or that the water dynamic rearward tension (Tr) is not less than 47 dyn/cm and the surface tension acidity term ($\gamma^+$) is not less than 0.01 mJ/m$^2$. It is the coating composition according to the fourth aspect of the present invention.

The method of applying said coating composition is not critical but may be any of the conventional coating methods using a roll coater, air spray gun, airless spray gun, curtain flow coater or the like. A suitable method can be selected from among them depending on the intended use of the substrate.

The baking conditions may be adequately selected according to the reaction temperature for the curing agent contained in said coating composition. Generally, baking is preferably performed within the range of 140°C x 20 minutes to 250°C x 30 seconds. In the case of baking in a short period of about 30 seconds to 2 minutes, the temperature is controlled in terms of ultimate temperature and baking is carried out generally at 190 to 230°C. When said coating composition is of the cold-setting type, drying is performed at room temperature for at least one day, preferably 2 to 3 days, more preferably at least one week.

In the film forming method according to the fifth aspect of the invention, the application and baking of said primer and said coating composition may be performed on the 2 coat/2 bake or 2 coat/1 bake basis.

The coated article thus provided with a paint film shows good raindrop-fouling resistance and therefore is suited for use as a substrate for a building or the like to be used outdoors. Said coated article is also a subject matter of the present invention.

In accordance with the present invention, the correlationship with the raindrop-fouling resistance, which could have never been explained in terms of the conventional static contact angle, could be explained by introducing the water dynamic rearward tension (Tr) and it could be established that the water wettability of the paint film is a dominant factor with respect to the raindrop-fouling resistance. Based on this relationship, it could also be found that when the water dynamic rearward tension (Tr) is not less than 47 dyn/cm, the raindrop-fouling resistance is good. Therefore, when the water dynamic rearward tension (Tr) of the film surface is caused to be not less than 47 dyn/cm, water flows resulting from water drops or raindrops coming off the film surface will not concentrate in one place, hence contaminants in rain will hardly adhere to the film. As a result, a paint film capable of showing good raindrop-fouling resistance can be provided.

By controlling the surface tension acidity term ($\gamma^+$) as a parameter of the film surface to a level not less than 0.01 mJ/m$^2$ in addition to the control of the water dynamic rearward tension (Tr), a paint film capable of showing good resistance to fouling by acidic substance-containing raindrops can be provided.

Furthermore, by adding the alkoxysilyl-containing organic polymer (I) and/or the partial hydrolyzed condensate (II) of the organosilicon compound to the coating composition or applying the same to a film surface, the following advantages can be obtained:

(1) The water dynamic rearward tension (Tr) of the film surface can be caused to be not less than 47 dyn/cm, whereby the raindrop-fouling resistance can be improved.

(2) The surface tension acidity term ($\gamma^+$) can be controlled to a level not less than 0.01 mJ/m$^2$, whereby good resistance to fouling by acidic substance-containing raindrops can be produced.

(3) By designing the alkoxysilyl-containing organic polymer (I) so that the content of the alkoxysilyl-containing monomer or the molecular weight of the resulting organic polymer can be increased, readily hydrolyzable alkoxysilyl groups can be introduced in high concentrations and thus the effect which renders the film surface hydrophilic can be produced even at a low addition level of said organic polymer (I) to the coating composition.

(4) Since the alkoxysilyl-containing organic polymer (I) has a polymer skeleton, the paint film hardly undergoes cracking because of the stress relaxation action of said skeleton even when SiOR groups remaining unhydrolyzed undergo hydrolysis and condensation during outdoor exposure.

(5) The alkoxysilyl-containing organic polymer (I) and the partial hydrolyzed condensate (II) of the organosilicon compound will not decompose or vaporize under baking conditions, so that a paint film having good water wettability and good durability can be provided.

Thus, the problems inherent in the conventional paint films in which alkoxysilane condensates are used as additives, namely the problem that the hydrolysis step is time-consuming and the hydrophilicity of the film is insufficient during the hydrolysis, allowing adhesion of contaminants; the problem that the SiOR and SiOH groups contained in the film undergo condensation under the influence of acid rain, for instance, causing cracking of the film; the problem that the alkoxysilane condensate, which is low in molecular weight, when applied in baking coating compositions, readily evaporates; and, further, the problem that the alkoxysilane condensate is required in large amounts and thus adversely affect the crack resistance of the film and the stability of the coating composition, among others, can be neatly solved.

The paint film for outside plates and coating composition of the present invention can be applied to precoated metals (PCMs) and for postcoating as well. Being characterized by good raindrop-fouling resistance and good crack resistance, they are particularly suited in those fields in which the resistance to fouling by raindrops and by acidic substance-containing rainwater of outdoor metallic products, for example building roofings, walls, fences, poles,guardrails, highway girder coverings, tunnel interior materials and other road materials, benches and other exterior materials, is of great importance.

BEST MODE FOR CARRYING OUT THE INVENTION

The following examples are further illustrative of the present invention. However, they are by no means limitative of the scope thereof.

(1) Correlation between water dynamic rearward tension (Tr) and raindrop-fouling resistance

Example 1-1

Uniflon C (white) (polyfluorovinylidene/acrylic mixed resin type thermoplastic paint, product of Nippon Paint) was used as the base paint. Uniflon C (white) is a paint produced by adding 100 weight parts of titanium oxide pigment (Tipaque CR97, product of Ishihara Sangyo) to 100 weight parts of resin solids and dispersing the pigment using a glass bead mill. To this was added sodium sulfosuccinate (Sunsepara 100, product of Kao Corp.), as a hydrophilic additive, in an amount of 8 weight parts per 100 weight parts of the solids of said paint, and dispersion was again effected using a glass bead mill. The resulting composition was applied to a substrate and a paint film with a thickness of 20 µm was formed by baking at an ultimate temperature of 245°C for 60 seconds. The paint film obtained was submitted to the following tests.

Determination of water dynamic rearward tension (Tr)

Test pieces (50 mm in length, 25 mm in width and 0.5 mm in thickness) with the side reverse to the side for film formation being back sealed with a polytetrafluoroethylene tape were provided with paint films using each coating composition and, then, using the measuring apparatus shown in Fig. 1, the load on each coated test piece was measured at a rate of support movement of 20 mm/minute and the water dynamic rearward tension was calculated. The circumferential length of the coated test piece was 150 mm.

Raindrop-fouling resistance

The coated test pieces were set vertically and rain was allowed to fall onto the coated surface from a roof made of a 30 cm corrugated plate (having 3-mm-deep grooves at 3-mm pitches) and inclined at an angle of 30 ° . After allowing to stand for 2 months, the fouling state of each coated surface was evaluated by the eye according to the criteria shown below. The results are shown in Table 1. The relation between the water dynamic rearward tension and the raindrop-fouling resistance is shown in Fig. 4.

5 points : No trace of rainwater running.
4 points : Slight traces of rainwater running.
3 points : Medium traces of rainwater running.
2 points : Considerable traces of rainwater running.
1 point : Marked traces of rainwater running.

Example 1-2

A paint film was formed in the same manner as in Example 1-1 except that dry-process silica (Aerosil TT600, product of Nippon Aerosil) was used as the hydrophilic additive. The paint film obtained was tested in the same manner as in Example 1-1. The results are shown in Table 1 and Fig. 4.

Example 1-3

A paint film was formed in the same manner as in Example 1-1 except that wet-process silica (Nipsil E200A, product of Nippon Silica Industries) was used as the hydrophilic additive. The paint film obtained was tested in the same manner as in Example 1-1. The results are shown in Table 1 and Fig. 4.

Example 1-4

A paint film was formed in the same manner as in Example 1-1 except that wet-process hydrophobic silica (Nipsil SS-20, product of Nippon Silica Industries) was used as the hydrophilic additive. The paint film obtained was tested in the same manner as in Example 1-1. The results are shown in Table 1 and Fig. 4.

Example 1-5

A paint film was formed in the same manner as in Example 1-1 except that dry-process hydrophobic silica (Aerosil R972, product of Nippon Aerosil) was used as the hydrophilic additive. The paint film obtained was tested in the same manner as in Example 1-1. The results are shown in Table 1 and Fig. 4.

Example 1-6

A paint film was formed in the same manner as in Example 1-1 except that a tetramethoxysilane-derived partial hydrolyzed condensate [MKC Silicate MS51 (each substituent being methoxy), product of Mitsubishi Chemical] was used as the hydrophilic additive. The paint film obtained was tested in the same manner as in Example 1-1. The results are shown in Table 1 and Fig. 4.

Example 1-7

A paint film was formed in the same manner as in Example 1-1 except that 5 weight parts of a tetramethoxysilane-derived partial hydrolyzed condensate [MKC Silicate MS56 (each substituent being methoxy), product of Mitsubishi Chemical] was used as the hydrophilic additive. The paint film obtained was tested in the same manner as in Example 1-1. The results are shown in Table 1 and Fig. 4.

Comparative Example 1-1

A paint film was formed in the same manner as in Example 1-1 except that no hydrophilic additive was used. The paint film obtained was tested in the same manner as in Example 1-1. The results are shown in Table 1 and Fig.4.

Table 1

| | Water dynamic rearwar tension (dyn/cm) | Raindrop-fouling resistance, full marks; 5 points |
|---|---|---|
| Example 1-1 | 53.2 | 2 |
| Example 1-2 | 61.0 | 4 |
| Example 1-3 | 51.4 | 3 |
| Example 1-4 | 55.7 | 3 |
| Example 1-5 | 52.3 | 3 |
| Example 1-6 | 55.7 | 3 |
| Example 1-7 | 55.7 | 3 |
| Comparative example 1-1 | 45.8 | 1 |

From Fig. 4, it is evident that there is a strong correlation between the raindrop-fouling resistance and the water dynamic rearward tension (Tr). Therefore, a straight line representing this correlation was determined. In Fig. 4, this line is shown as a broken line. From this straight line, it was revealed that when the raindrop-fouling resistance is evaluated as 1 point, the water dynamic rearward tension (Tr) is 45.8 dyn/cm.

From Table 1 and Fig. 4, it was further revealed that addition to the base paint of hydrophilic materials such as wet-process silica and dry-process silica or hydrophilic additives such as sodium sulfosuccinate and tetramethoxysilane -derived partial hydrolyzed condensate results in increases in water dynamic rearward tension (Tr), hence in improvements in the raindrop-fouling resistance. Furthermore, it was revealed that even when compared with the use of MS51 as disclosed in the prior art WO Publication 94/06879, still better results can be obtained with respect to the raindrop-fouling resistance if the water dynamic rearward tension (Tr) is not less than 56 dyn/cm.

(2) Correlation between surface tension acidity term ($\gamma^+$) and resistance to fouling by acidic substance-containing rainwater

Production Example 1

Synthesis of alkoxysilyl-containing homopolymer (PTMSM)

A reactor equipped with a heating device, stirrer and reflux condenser was charged with 80 weight parts of xylene and 20 parts of n-butanol. The temperature was raised to 110 °C with stirring and while maintaining that temperature, a mixture of 100 weight parts of $\gamma$-methacryloyloxypropyltrimethoxysilane and 1.0 weight part of t-butylperoxy-2-ethylhexanoate was added dropwise from a dropping funnel over 3 hours. After completion of the dropping, the temperature was maintained at 110 °C for 30 minutes and then 0.5 weight part of t-butylperoxy-2-ethylhexanoate was added. Thereafter, stirring was further continued at 110°C for 2 hours, to give PTMSM. The thus-obtained PTMSM had a nonvolatile content of 50.0%, an alkoxysilyl equivalent of 83 g/mol, and a number average molecular weight of 10,000.

Example 2-1

Uniflon C (white) (polyfluorovinylidene/acrylic mixed resin type thermoplastic paint, product of Nippon Paint) was used as the base paint. Uniflon C (white) is a paint produced by adding 100 weight parts of titanium oxide pigment (Tipaque CR97, product of Ishihara Sangyo) to 100 weight parts of resin solids and dispersing the pigment using a glass bead mill. To this was added tetramethoxysilane-derived partial hydrolyzate [MKC Silicate MS56 (each substituent being methoxy), product of Mitsubishi Chemical], as a hydrophilic additive, in an amount of 5 weight parts per 100 weight parts of the solids of said paint with the pigment dispersed therein, and dispersion was again effected using a glass bead mill. The resulting composition was applied to a substrate and a paint film with a thickness of 20 µm was formed by baking at an ultimate temperature of 245°C for 60 seconds. The paint film obtained was submitted to the following tests.

Determination of surface tension acidity term ($\gamma^+$)

Based on the surface tension parameters for various liquids shown in Table 2 and the contact angle values measured with these liquids, calculation was made according to the above-mentioned equation (x). The results are shown in Table 3.

Raindrop-fouling resistance

The coated test pieces were set vertically and rain was allowed to fall onto the coated surface from a roof made of a 30 cm corrugated plate (having 3-mm-deep grooves at 3-mm pitches) and inclined at an angle of 30 °. After allowing to stand for 1 month, the fouling state of each film surface was evaluated by the eye according to the criteria shown below. The results are shown in Table 3.

○ : Very slight traces of rainwater running.
× : Dark traces of rainwater running.

Carbon-fouling test

Mitsubishi Carbon Black MA100 was dispersed in deionized water to a concentration of 5%. This dispersion was placed on the film surface and the whole was maintained at 80°C for 24 hours. The dispersion was then washed off using a sponge under running tap water. After washing, the color difference of the paint film was measured using a colorimeter and the value of ΔL was determined. The results are shown in Table 3.

Table 2

| | $\gamma$ | $\gamma^{LW}$ | $\gamma^{SR}$ | $\gamma^+$ | $\gamma^-$ |
|---|---|---|---|---|---|
| Water | 72.8 | 21.8 | 51 | 25.5 | 25.5 |
| Ethylene glycol | 48 | 29 | 19 | 1.9 | 47 |
| Diiodomethane | 50.8 | 50.8 | ca.0 | -- | -- |

Example 2-2

A paint film was formed in the same manner as in Example 2-1 except that tetramethoxysilane-derived partial hydrolyzate [MKC Silicate MS51 (each substituent being methoxy), product of Mitsubishi Chemical] was used as the hydrophilic additive. This paint film was tested in the same manner as in Example 2-1. The results are shown in Table 3.

Example 2-3

A paint film was formed in the same manner as in Example 2-1 except that PTMSM prepared in Production Example 1 was used as the hydrophilic additive. This paint film was tested in the same manner as in Example 2-1. The results are shown in Table 3.

Comparative Example 2-1

A paint film was formed in the same manner as in Example 2-1 except that no hydrophilic additive was used. This paint film was tested in the same manner as in Example 2-1. The results are shown in Table 3.

Table 3

| | Example | | | Comparative Example 2-1 |
|---|---|---|---|---|
| | 2-1 | 2-2 | 2-3 | |
| Surface tension (total) | 36.2 | 37.6 | 41.4 | 37.5 |
| Nonpolarity term $\gamma^{LW}$ | 33.4 | 34.2 | 39.3 | 37.5 |
| Acid-base term 7 ab | 2.8 | 3.4 | 2.2 | 0.035 |
| Basicity term $\gamma^-$ | 20 | 21 | 15 | 19 |
| Acidity term $\gamma^+$ | 0.10 | 0.14 | 0.06 | 0.00002 |
| Carbon-fouling resistance | <1 | 10 | <1 | 60 |

Table 3 (continued)

| | Example | | | Comparative Example 2-1 |
|---|---|---|---|---|
| | 2-1 | 2-2 | 2-3 | |
| Raindrop-fouling resistance | ○ | ○ | ○ | × |
| Dynamic rearward tension (dyn/cm) | 55.7 | 55.7 | 61.7 | 45.8 |

In Table 3, the surface tension (total) was calculated according to the following equations:

$$\text{Surface tension (total)} = \gamma^{LW} + \gamma ab$$

$$\gamma\, ab = 2\sqrt{(\gamma^{+} \cdot \gamma^{-})}$$

From the above results, while no correlation can be explained between the surface tension (γ) or the nonpolariry term ($\gamma^{LW}$) or basicity term ($\gamma^{-}$) thereof and the raindrop-fouling resistance or the carbon-fouling resistance, there is an evident correlation between the acidity term ($\gamma^{+}$) and such resistance.

(3) Change in raindrop-fouling resistance upon addition of organic polymer (I)

Examples 3-1 to 3-7

Uniflon C (white) (polyfluorovinylidene/acrylic mixed resin type thermoplastic paint, product of Nippon Paint) was used as the base paint. Uniflon C (white) is a paint produced by adding 100 weight parts of titanium oxide pigment (Tipaque CR97, product of Ishihara Sangyo) to 100 weight parts of resin solids and dispersing the pigment using a glass bead mill. To this was added PTMSM prepared in Production Example 1, as the organic polymer (I), in amounts specified in Table 4 relative to the solids of the paint. The resulting composition was applied to a substrate and a paint film with a thickness of 20 μm was formed by baking at an ultimate temperature of 245°C for 60 seconds. The paint film obtained was tested for water dynamic rearward tension (Tr) in the same manner as in Example 1-1 and for carbon-fouling resistance in the same manner as in Example 2-1. The paint film was also evaluated for raindrop-fouling resistance, processability, alkali resistance, acid resistance and film cracking by the methods mentioned below. The results are shownin Table 4 and Fig. 5.

Raindrop-fouling resistance

The coated test pieces were set vertically and rain was allowed to fall onto the coated surface from a roof made of a 30 cm corrugated plate (having 3-mm-deep grooves at 3-mm pitches) and inclined at an angle of 30 ° . After allowing to stand for 1 month, the fouling state of each film surface was evaluated by the eye according to the criteria shown below. The results are shown in Table 4. Further, the relation between the water dynamic rearward tension and the raindrop-fouling resistance is shown in Fig. 5.

5 points : No trace of rainwater running.
4 points : Slight traces of rainwater running.
3 points : Medium traces of rainwater running.
2 points : Considerable traces of rainwater running.
1 point : Marked traces of rainwater running.

Processability

The test specimen provided with a paint film was bent, the bent portion was observed for cracking of the paint film, and evaluation was made in terms of no crack T number.

Alkali resistance

After 24 hours of immersion in 5% NaOH solution at 20°C, blistering evaluation was made according to the blistering evaluation schema shown in Fig. 8. When no blistering was observed, the paint film was evaluated as "10". When blistering corresponded to "8M" in size and "4F" in density, the paint film was evaluated as "8F".

Acid resistance

After 24 hours of immersion in 5% HCl solution at 20 °C, blistering evaluation was made according to the blistering evaluation schema shown in Fig. 8. When no blistering was observed, the paint film was evaluated as "10". When blistering corresponded to "8M" in size and "4F" in density, the paint film was evaluated as "8F".

Film cracking

On the occasion of film formation, overbaking was performed at 250 °C for 20 minutes and the appearance of the baked paint film was observed.

○ : No cracking.
Δ : Slight cracking.
× : Marked cracking.

Comparative Example 3-1

A paint film was formed in the same manner as in Example 3-1 except that the addition of PTMSM was omitted. The paint film obtained was tested in the same manner as in Example 3-1. The results are shown in Table 4 and Fig. 5.

Table 4

| Paint film No. | Example | | | | | | | Comparative Ex.3-1 |
|---|---|---|---|---|---|---|---|---|
| | 3-1 | 3-2 | 3-3 | 3-4 | 3-5 | 3-6 | 3-7 | |
| Addition level (%) | 0.2 | 1 | 2 | 4 | 6 | 8 | 10 | -- |
| Water dynamic reaward tension (dyn/cm) | 50.5 | 52.3 | 55.7 | 51.4 | 55.7 | 59.6 | 57.3 | 45.8 |
| Raindrop-fouling resistance (Full; 5) | 2 | 2 | 3 | 3 | 3 | 5 | 5 | 1 |
| Carbon-fouling resistance (ΔL) | ca.6 | ca.1 | < 1 | < 1 | < 1 | < 1 | < 1 | 53 |
| Process-ability | 2T | 2T | 2T | 3T | 3T | 3T | 4T | 2T |
| Alkali resistance | 10 | 10 | 10 | 10 | 10 | 8F | 8F | 10 |
| Acid resistance | 10 | 10 | 10 | 10 | 10 | 8F | 8F | 10 |
| Film cracking | ○ | ○ | ○ | ○ | ○ | ○ | ○ | ○ |

The above data revealed that the addition of PTMSM, as an organic polymer (I), even in small amounts to the base paint, results in increases in water dynamic rearward tension (Tr) and that such paint films can have good raindrop-fouling resistance. It was also revealed that the raindrop-fouling resistance becomes better as the amount of PTMSM increases but that at addition levels above 8% by weight, the raindrop-fouling resistance has arrived at saturation and further increases in addition level can no longer attain any further effect.

Even when PTMSM was used as an organic polymer (I), it was revealed that there is a strong correlation between the raindrop-fouling resistance and the water dynamic rearward tension (Tr). In Fig. 5, the straight line shown by a broken line indicates the above correlationship. According to this straight line, the water dynamic rearward tension (Tr) corresponding to the raindrop-fouling resistance evaluated as 1 point was found to be 45.8 dyn/cm.

Furthermore, it was revealed that the addition of PTMSM to the base paint results in an increase in the surface tension acidity term ($\gamma^+$), hence can lead to reduced fouling by carbon particles contained in acid rain and to improved acid resistance of the paint film.

(4) Change in the raindrop-fouling resistance upon addition of partial hydrolyzed condensate (II)

Production Example 2

Synthesis of acrylic polyol resin (a)

A reactor equipped with a heating device, stirrer and reflux condenser was charged with 80 weight parts of xylene and 20 parts of n-butanol. The temperature was raised to 110 °C with stirring and while maintaining that temperature, a mixture of 26.5 weight parts of methyl methacrylate, 23.5 weight parts of 2-ethylhexylmethacrylate, 31.5 weight parts of n-butyl methacrylate, 18.6 weight parts of 2-hydroxyethyl acrylate and 1.0 weight part of t-butylperoxy-2-ethylhexanoate was added dropwise from a dropping funnel over 3 hours. After completion of the dropping, the temperature was maintained at 110°C for 30 minutes and then 0.5 weight part of t-butylperoxy-2-ethylhexanoate was added. Thereafter, stirring was further continued at 110°C for 2 hours, to give an acrylic polyol resin (a). The thus-obtained acrylic polyol resin (a) had a nonvolatile content of 50.0%, a hydroxyl value of 80 mg KOH/g, and a number average molecular weight of 8,000.

Production Example 3

Synthesis of acrylic polyol resin (b)

A reactor equipped with a heating device, stirrer and reflux condenser was charged with 80 weight parts of xylene and 20 parts of n-butanol. The temperature was raised to 110 °C with stirring and while maintaining that temperature, a mixture of 36.7 weight parts of methyl methacrylate, 31.6 weight parts of ethyl acrylate, 31.9 weight parts of 2-hydroxyethyl methacrylate/ε-caprolactone (1:2) adduct (product of Daicel Chemical Industries) and 5.0 weight parts of t-butylperoxy-2-ethylhexanoate was added dropwise from a dropping funnel over 3 hours. After completion of the dropping, the temperature was maintained at 110°C for 30 minutes and then 0.5 weight part of t-butylperoxy-2-ethylhexanoate was added. Thereafter, stirring was further continued at 110 °C for 2 hours, to give an acrylic polyol resin (b). The thus-obtained acrylic polyol resin (b) had a nonvolatile content of 50.0%, a hydroxyl value of 50 mg KOH/g, and a number average molecular weight of 5,000. Example 4-1 and Comparative Example 4-1

According to the formulations given in Table 5, the pigment, acrylic polyol resin and alkoxysilane-derived partial hydrolyzed condensate, together with glass beads, were treated for dispersion in an SG mill at 30 °C for 1.5 hours. The degree of dispersion as measured with a particle gauge was not more than 5 microns. Further, the specified amount of the curing agent specified in Table 5, and an amount of 0.1% by weight, relative to the solids, of dibutyltin dilaurate as a catalyst were added and the whole was stirred by means of a Disper homogenizer to give a coating composition.

Preparation of coated sheets

A 0.4-mm-thick galvanized steel sheet treated by zincphosphating was used as the substrate. The surface thereof was coated with a polyester resin-based primer (Flexicoat P600 primer; product of Nippon Paint) to a dry thickness of 5 μm using a bar coater, followed by baking at an ultimate temperature of 220°C for 1 minute. Thereafter, the coating composition obtained in Example 4-1 or Comparative Example 4-1 was applied to a dry thickness of 20 μm using a barcoater and baked at an ultimate temperature of 220 °C for 1 minute.

The thus-obtained coated sheets were tested for curability, raindrop-fouling resistance, hardness, chemical resistance and film-forming ability by the test methods mentioned below, and the water dynamic rearward tension and surface tension acidity term ($\gamma^+$) were measured. The results are shown in Table 5. The coating compositions were also tested for moisture stability, and the results are shown in Table 5.

Curability

The coated sheet was rubbed with a piece of gauze impregnated with xylene by reciprocating the gauze together with a load of 1 kg 100 times. The state of the paint film was then examined.

○ : No change.
Δ : Partial dissolution.
× : Exposure of the basis material.

Raindrop-fouling resistance

The coated sheet was allowed to be fouled by exposing to natural rain for 3 months, then washed with water and examined by the eye for appearance.

○ : Stains are removed.
Δ : Stains remain.

Hardness

Hardness measurement was made according to the pencil hardness test method described in JIS S 6006.

Alkali resistance

After 12 hours of immersion in 5% NaOH solution at 20°C, the appearance of the paint film was examined by the eye.

○ : No change.
Δ : Blistering.
× : Dissolution of the paint film.

Acid resistance

After 12 hours of immersion in 5% HCl solution at 20 °C, the appearance of the paint film was examined by the eye.

○ : No change.
Δ : Blistering.
× : Dissolution of the paint film.

Film-forming ability

The state of the paint film applied by the above coating method was evaluated by the eye.

○ : Smooth and without wrinkling.
× : Wrinking and cracking.

Measurement of water dynamic rearward tension (Tr)

Test pieces (50 mm in length, 25 mm in width and 0.5 mm in thickness) with the side reverse to the side for film formation being back sealed with a polytetrafluoroethylene tape were provided with paint film using each coating composition and, then, using the measuring apparatus shown in Fig. 1, the load on each coated test piece was measured at a rate of support movement of 20 mm/minute, and the water dynamic rearward tension was calculated. The circumferential length of each coated test piece was 150 mm.

Surface tension acidity term ($\gamma^+$)

Based on the surface tension parameters given in Table 2 for various liquids and the contact angle values measured with these liquids, calculation was made according to the above-mentioned equation (x).

Moisture stability

Twenty grams of the coating composition to be tested was placed in a bottle with a diameter of 20 mm and allowed to stand, in the open state, at a temperature of 20 °C and a humidity of 70% for 24 hours. Then, a mixture of 10 g of xylene and 10g of n-butanol was added and, after agitation, the state of the system was observed.

○ : No change.
× : Gelation.

Table 5

| | Example 4-1 | Comparative Example 4-1 |
|---|---|---|
| Pigment; Tipaque CR97 | 50 | 50 |
| Resin;<br>Acrylic polyol resin (a)<br>Acrylic polyol resin (b) | --<br><br>23 | 21<br><br>-- |
| Alkoxysilane-derived partial hydrolyzed condensate; MKC Silicate MS51 | 20 | -- |
| Curing agent; Desmodur BL3175 | 7 | 9 |
| Evaluation results; | | |
| Curability | ○ | ○ |
| Raindrop-fouling resistance | 0 | × |
| Hardness | 3H | H |
| Alkali resistance | ○ | ○ |
| Acid resistance | ○ | 0 |
| Film-forming ability | ○ | 0 |
| Dynamic rearward tension (dyn/cm) | 56.3 | 23.8 |
| Moisture stability | ○ | ○ |

The substances given in Table 5 are as follows:

- Tipaque CR97 : Titanium dioxide (product of Ishihara Sangyo);
- MKC Silicate MS51 : Tetramethoxysilane-derived partial hydrolyzed condensate (product of Mitsubishi Chemical), $SiO_2$ content of 50% by weight;
- Desmodur BL3175 : MEK oxime-blocked HMDI (product of Sumitomo Bayer Urethane).

From the above results, it was revealed that the addition of the tetramethoxysilane-derived partial hydrolyzed condensate, as an organosilicon compound-derived partial hydrolyzed condensate (II), to the base paint results in an increase in water dynamic rearward tension (Tr) and that sucti paint film can have good raindrop-fouling resistance.

(5) Change in raindrop-fouling resistance depending on alkoxysilyl equivalent of organic polymer (I)

Example 5-1

Uniflon C (white) (polyfluorovinylidene/acrylic mixed resin type thermoplastic paint, product of Nippon Paint) was used as the base paint. Uniflon C (white) is a paint produced by adding 100 weight parts of titanium oxide pigment (Tipaque CR97, product of Ishihara Sangyo) to 100 weight parts of resin solids and dispersing the pigment using a glass bead mill. To this was added 100% homopolymer (PTMSM, alkoxysilyl equivalent 82.8 g/mol, number average molecular weight 12,000) of KBM 503 (7 -methacryloyloxypropyltrimethoxysilane, product of Shin-Etsu Chemical) in an amount of 8% by weight relative to the solids in the paint with said pigment dispersed therein. After one more dispersion treatment in a glass bead mill, the resulting composition was applied to a substrate and a paint film with a thickness of 20 µm was formed by baking at an ultimate temperature of 245°C for 60 seconds. The coat obtained was submitted to the following tests.

<u>Measurement of water dynamic rearward tension (Tr)</u>

Test pieces (50 mm in length, 25 mm in width and 0.5 mm in thickness) with the side reverse to the side for film formation being back sealed with a polytetrafluoroethylene tape were provided with paint film using each coating composition and, then, using the measuring apparatus shown in Fig. 1, the load on each coated test piece was measured at a rate of support movement of 20 mm/minute and the water dynamic rearward tension was calculated. The circumferential length of the coated test piece was 150 mm.

Raindrop-fouling resistance

The coated test pieces were set vertically and rain was allowed to fall onto the coat surface from a roof made of a 30 cm corrugated plate (having 3-mm-deep grooves at 3-mm pitches) and inclined at an angle of 30 ° . After allowing to stand for 2 months, the fouling state of each film surface was evaluated by the eye according to the criteria shown below. The results are shown in Table 6.

◎: No trace of rainwater running.
○ : Very slight traces of rainwater running.

Carbon-fouling test

Mitsubishi Carbon Black MA100 was dispersed in deionized water to a concentration of 5%. This dispersion was placed on the film surface and the whole was maintained at 80°C for 24 hours. The dispersion was then washed off using a sponge under running tap water. After washing, the color difference of the paint film was measured using a colorimeter and the value of ΔL was determined. The results are shown in Table 6.

Example 5-2

A coating composition was prepared in the same manner as in Example 5-1 except that 100% homopolymer (PDMSM, alkoxysilyl equivalent 116 g/mol, number average molecular weight 12,300) of KBM 502 (γ-methacryloyloxypropylmethyldimethoxysilane, product of Shin-Etsu Chemical) was used in lieu of PTMSM. Then, a paint film was formed in the same manner as in Example 5-1. The paint film obtained was tested in the same manner as in Example 5-1. The results are shown in Table 6.

Example 5-3

A coating composition was prepared in the same manner as in Example 5-1 except that 100% homopolymer (PTESM, alkoxysilyl equivalent 96.8 g/mol, number average molecular weight 11,080) of 7 -methacryloyloxypropyltriethoxysilane was used in lieu of PTMSM. Then, a paint film was formed in the same manner as in Example 5-1. The paint film obtained was tested in the same manner as in Example 5-1. The results are shown in Table 6.

Example 5-4

A coating composition was prepared in the same manner as in Example 5-1 except that an acrylic copolymer (TMSM, alkoxysilyl equivalent 414 g/mol, number average molecular weight 9,800) derived from 20% of 7 -methacryloyloxypropyltrimethoxysilane and 80% of methyl methacrylate was used in lieu of PTMSM. Then, a paint film was formed in the same manner as in Example 5-1. The paint film obtained was tested in the same manner as in Example 5-1. The results are shown in Table 6.

Table 6

| | Water dynamic rearwar tension (dyn/cm) | Raindrop-fouling resistance | Carbon-fouling resistance |
|---|---|---|---|
| Example 5-1 | 56.5 | ◎ | <1 |
| Example 5-2 | 54.1 | ○ | 6 |
| Example 5-3 | 59.6 | ○ | 5 |
| Example 5-4 | 51.4 | ○ | 10 |

From the above results, it was revealed that while the organic polymers (I) show sufficient raindrop-fouling resistance irrespective of alkoxysilyl equivalent, the carbon-fouling resistance becomes better as the alkoxysilyl equivalent decreases.

**Claims**

1. A paint film for outside plates resistant to raindrop fouling, which has a water dynamic rearward tension (Tr) of not less than 47 dyn/cm.

2. A paint film for outside plates resistant to fouling by rainwater containing acidic substances, which has a surface tension acidity term ($\gamma^+$) of not less than 0.01 mJ/$m^2$.

3. A paint film for outside plates resistant to fouling by rainwater containing acidic substances, which has a water dynamic rearward tension (Tr) of not less than 47 dyn/cm and a surface tension acidity term ($\gamma^+$) of not less than 0.01 mJ/$m^2$.

4. The paint film for outside plates according to Claim 1 or 3, wherein the water dynamic rearward tension (Tr) is not less than 56 dyn/cm.

5. The paint film for outside plates according to Claim 2, 3 or 4, wherein the surface tension acidity term ($\gamma^+$) is not less than 0.05 mJ/$m^2$.

6. The paint film for outside plates according to Claim 1, 2, 3, 4 or 5, which comprises a film-forming resin and at least one member selected from the group consisting of an organic polymer (I) having at least one kind of alkoxysilyl group of the following general formula (1):

$$-Si(OR^1)_{3-n} \quad (1)$$

wherein $R^1$ represents hydrogen ; alkyl containing 1 to 11 carbon atoms; epoxyalkyl containing 2 to 11 carbon atoms; aryl containing 6 to 14 carbon atoms optionally substituted by at least one alkyl containing 1 to 8 carbon atoms, the total number of carbon atoms in the said aryl being up to 14 ; aralkyl containing 1 to 5 carbon atoms in its alkyl part and 6 to 10 carbon atoms in its aryl part, said aryl part being optionally substituted by at least one alkyl containing 1 to 4 carbon atoms, the total number of carbon atoms in the said aralkyl being up to 11 ; or alkenyl containing 2 to 11 carbon atoms; n represents 0, 1 or 2, and a partial hydrolyzed condensate (II) available upon hydrolysis and subsequent condensation of an organosilicon compound of the following general formula (2):

$$R^2{}_m-Si(OR^3)_{4-m} \quad (2)$$

wherein $R^2$ represents alkyl containing 1 to 6 carbon atoms; epoxyalkyl containing 2 to 11 carbon atoms; aryl containing 6 to 14 carbon atoms optionally substituted by at least one alkyl containing 1 to 8 carbon atoms, the total number of carbon atoms in the said aryl being up to 14 ; or alkenyl containing 2 to 11 carbon atoms; $R^3$ represents alkyl containing 1 to 6 carbon atoms; and m represents 0, 1, 2 or 3, with a degree of hydrolysis of less than 100%.

7. The paint film for outside plates according to Claim 6, wherein the organic polymer (I) has an acrylic skelton, $R^1$ is hydrogen or alkyl containing 1 or 2 carbon atoms and n is 0 or 1.

8. The paint film for outside plates according to Claim 7, wherein $R^1$ in the organic polymer (I) is methyl and said organic polymer has a number average molecular weight of 3,000 to 30,000.

9. The paint film for outside plates according to Claim 6, 7 or 8, wherein the organic polymer (I) has an alkoxysilyl equivalent of 82.8 to 144.

10. The paint film for outside plates according to any of Claims 6 to 9, wherein the partial hydrolyzed condensate (II) is a partial hydrolyzed condensate derived from a tetraalkoxysilane.

11. The paint film for outside plates according to Claim 10, wherein the partial hydrolyzed condensate (II) is a partial hydrolyzed condensate derived from a tetramethoxysilane.

**12.** The paint film for outside plates according to Claim 11, wherein the partial hydrolyzed condensate derived from the tetramethoxysilane has a mole ratio between silanol (SiOH) groups and methoxysilyl (SiOMe) groups (SiOH groups/SiOMe groups) of not more than 1/10.

**13.** A coating composition for providing the paint film for outside plates according to any of Claims 1 to 12, which comprises a film-forming resin (A) and at least one member selected from the group consisting of an organic polymer (I) having at least one kind of alkoxysilyl group of the following general formula (1):

$$-Si\ (OR^1)_{3-n} \quad (1)$$

wherein $R^1$ represents hydrogen ; alkyl containing 1 to 11 carbon atoms; epoxyalkyl containing 2 to 11 carbon atoms; aryl containing 6 to 14 carbon atoms optionally substituted by at least one alkyl containing 1 to 8 carbon atoms, the total number of carbon atoms in the said aryl being up to 14 ; aralkyl containing 1 to 5 carbon atoms in its alkyl part and 6 to 10 carbon atoms in its aryl part, said aryl part being optionally substituted by at least one alkyl containing 1 to 4 carbon atoms, the total number of carbon atoms in the said aralkyl being up to 11 ; or alkenyl containing 2 to 11 carbon atoms; n represents 0, 1 or 2, and a partial hydrolyzed condensate (II) available upon hydrolysis and subsequent condensation of an organosilicon compound of the following general formula (2) :

$$R^2{}_m\text{-}Si(OR^3)_{4-m} \quad (2)$$

wherein $R^2$ represents alkyl containing 1 to 6 carbon atoms ; epoxyalkyl containing 2 to 11 carbon atoms; aryl containing 6 to 14 carbon atoms optionally substituted by at least one alkyl containing 1 to 8 carbon atoms, the total number of carbon atoms in the said aryl being up to 14 ; or alkenyl containing 2 to 11 carbon atoms; $R^3$ represents alkyl containing 1 to 6 carbon atoms; and m represents 0, 1, 2 or 3, with a degree of hydrolysis of less than 100%.

**14.** The coating composition according to Claim 13, wherein the film-forming resin (A) is a thermoplastic resin, a thermosetting resin, or a cold-setting resin.

**15.** The coating composition according to Claim 14, wherein the thermoplastic resin comprises at least one member selected from the group consisting of polyfluorovinylidene, copolymers of polyfluorovinylidene and an acrylic resin, mixtures of polyfluorovinylidene and an acrylic resin, and plastisols.

**16.** The coating composition according to Claim 14, wherein the thermosetting resin comprises a polyol resin (a) having a hydroxyl value of 5 to 300 and a number average molecular weight of 500 to 20,000 and a curing agent (b) capable of reacting with said polyol resin (a).

**17.** The coating composition according to Claim 16, wherein the polyol resin (a) comprises at least one member selected from the group consisting of acrylic polyol resins, polyester polyol resins, fluorinated polyol resins, and silicone polyol resins.

**18.** The coating composition according to Claim lb or 17, wherein the curing agent (b) comprises at least one member selected from the group consisting of isocyanate compounds, blocked isocyanate compounds, and amino resins.

**19.** The coating composition according to Claim 18, wherein the blocked isocyanate compounds are diisocyanate compounds blocked with a blocking agent selected from the group consisting of a lactam-type blocking agent, an oxime-type blocking agent, an alcohol-type blocking agent and a diketone-type blocking agent.

**20.** The coating composition according to any of Claims 13 to 19, wherein the organic polymer (I) has an acrylic skelton, $R^1$ is hydrogen or alkyl containing 1 or 2 carbon atoms and n is 0 or 1.

**21.** The coating composition according to any of claims 13 to 20, wherein $R^1$ in the organic polymer (I) is methyl and said organic polymer has a number average molecular weight of 3,000 to 30,000.

**22.** The coating composition according to any of Claims 13 to 21, wherein the organic polymer (I) has an alkoxysilyl equivalent of 82.8 to 144.

**23.** The coating composition according to any of Claims 13 to 22, which comprises 0.5 to 50 parts by weight of the organic polymer (I) and/or 1 to 300 parts by weight of the partial hydrolyzed condensate (II) per 100 parts by weight of the solids in the coating composition containing the film-forming resin (A).

**24.** The coating composition according to Claim 23, wherein the partial hydrolyzed condensate (II) is a partial hydrolyzed condensate derived from a tetraalkoxysilane and is contained in an amount of 5 to 50 parts by weight per 100 parts by weight of the solids in the coating composition containing the film-forming resin (A).

**25.** The coating composition according to Claim 24, wherein the partial hydrolyzed condensate (II) is a partial hydrolyzed condensate derived from a tetramethoxysilane.

**26.** The coating composition according to Claim 25, wherein the partial hydrolyzed condensate derived from the tetramethoxysilane has a mole ratio between silanol (SiOH) groups and methoxysilyl (SiOMe) groups (SiOH groups/SiOMe groups) of not more than 1/10.

**27.** A method for forming a paint film for outside plates resistant to raindrop fouling, which comprises coating a substrate with at least one primer selected from the group consisting of an epoxy resin-based primer, a polyurethane-modified epoxy resin-based primer and a polyester resin-based primers, and then with the coating composition according to any of Claims 13 to 26, followed by baking.

**28.** A coated article resistant to raindrop fouling, which is coated with the paint film for outside plates according to any of Claims 1 to 12.

Fig. 1

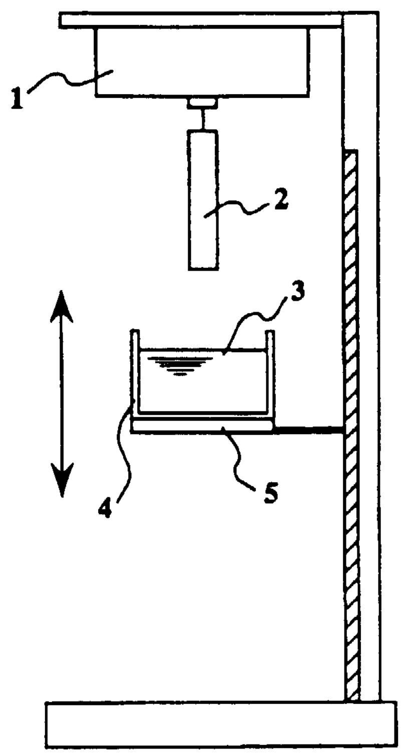

Fig. 2

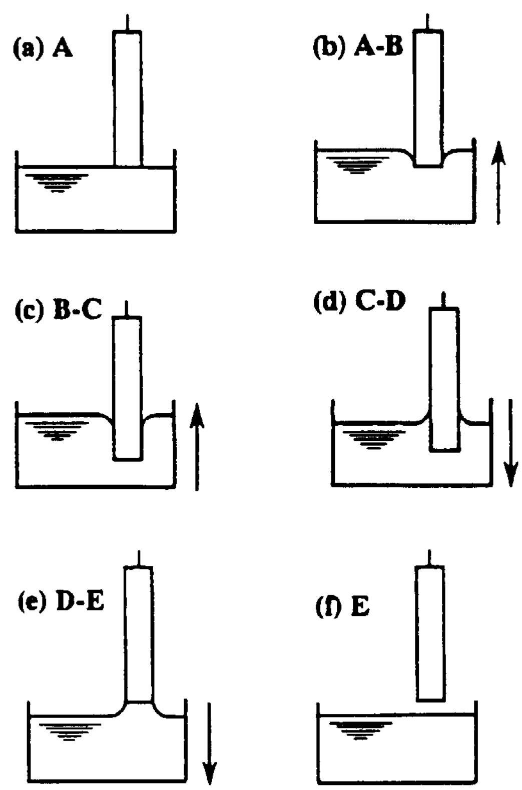

Fig. 3

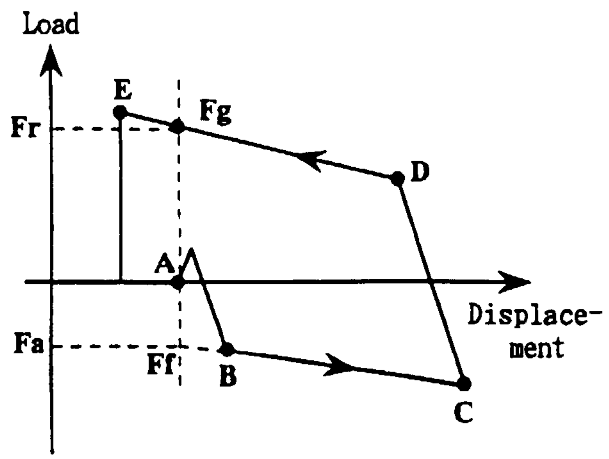
Load
E
Fg
Fr
D
A
Displace-
ment
Fa
Ff
B
C

Fig. 4

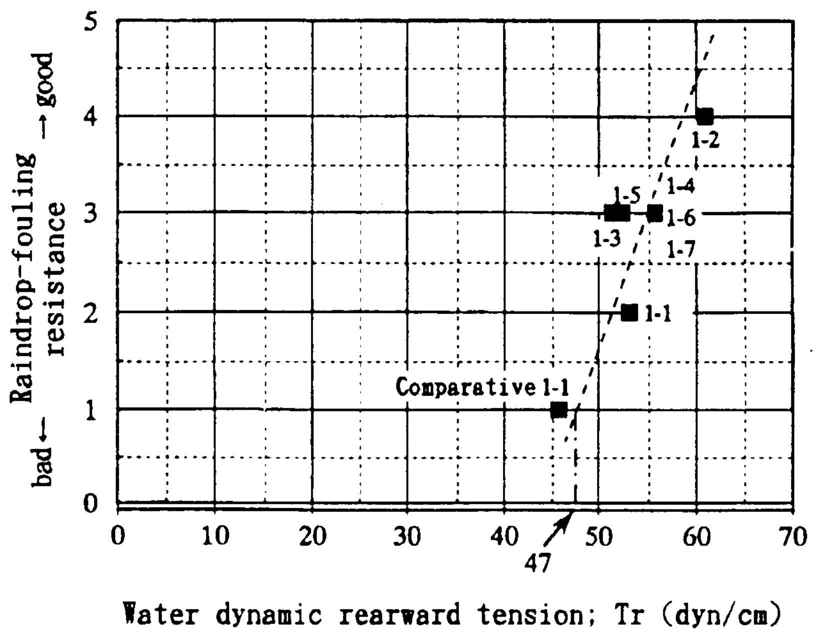
bad ← Raindrop-fouling resistance → good
5
4
3
2
1
0
1-2
1-5
1-4
1-6
1-3
1-7
1-1
Comparative 1-1
0
10
20
30
40
50
60
70
47
Water dynamic rearward tension; Tr (dyn/cm)

Fig. 5

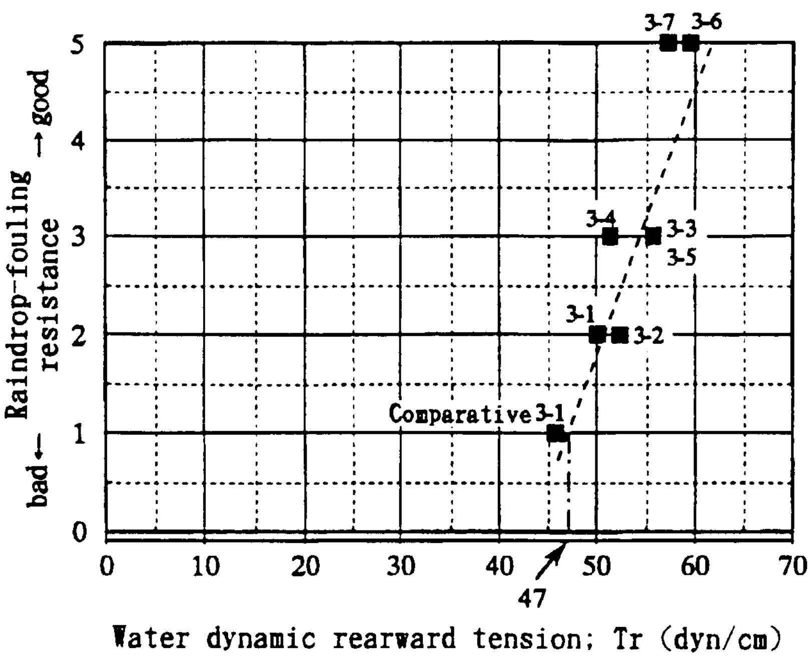
3-7
3-6
3-4
3-3
3-5
3-1
3-2
Comparative 3-1
47
5
4
3
2
1
0
0
10
20
30
40
50
60
70
bad ← Raindrop-fouling resistance → good
Water dynamic rearward tension; Tr (dyn/cm)

Fig. 6

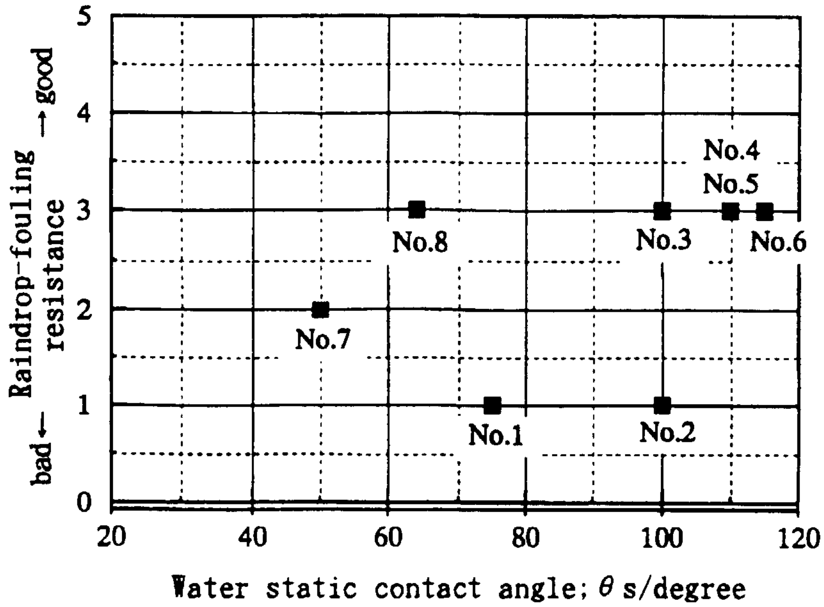


No. 1: Polyfluorovinilidene-acrylic mixed resin type paint

No. 2: Acrylic-silicon type resin paint

No. 3: No. 1 + dry-process silica

No. 4: No. 1 + wet-process silica

No. 5: No. 1 + dry-process hydrophobic silica

No. 6: No. 1 + wet-process hydrophobic silica

No. 7: No. 1 + sodium sulfosuccinate

No. 8: No. 1 + organosilicon compound

Fig. 7

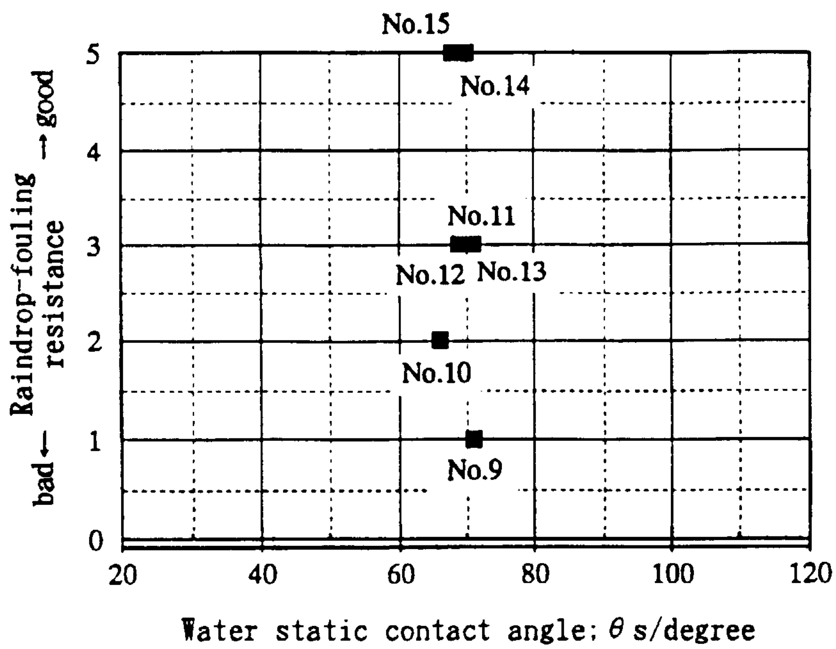


No. 9: Polyfluorovinilidene-acrylic mixed resin type paint

No. 10: Alkoxysilyl-containing polymer 1 %

No. 11: Alkoxysilyl-containing polymer 2 %

No. 12: Alkoxysilyl-containing polymer 4 %

No. 13: Alkoxysilyl-containing polymer 6 %

No. 14: Alkoxysilyl-containing polymer 8 %

No. 15: Alkoxysilyl-containing polymer 10 %

Fig. 8

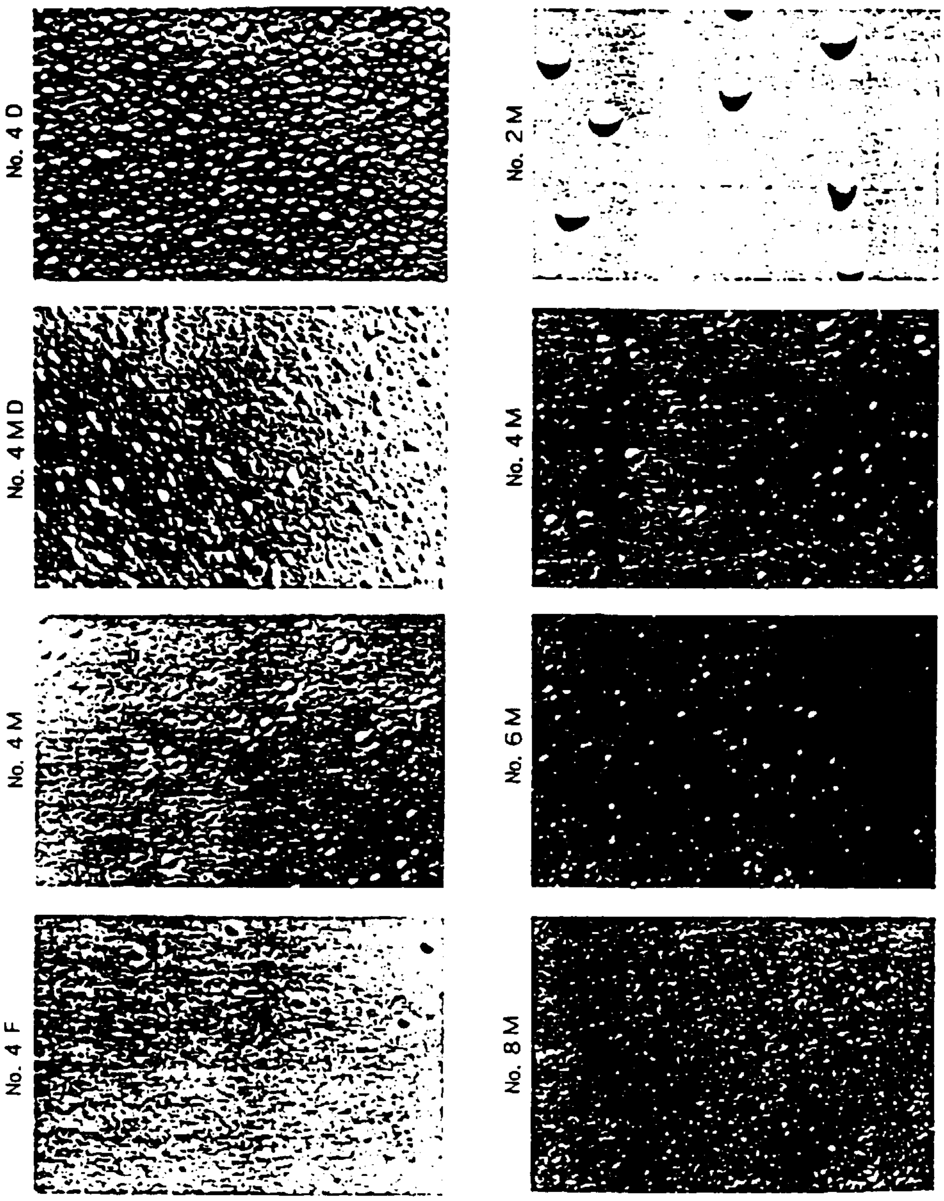

European Patent Office

# EUROPEAN SEARCH REPORT

Application Number
EP 97 40 2529

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 400 303 A (KANEGAFUCHI CHEMICAL IND) 5 December 1990<br>* page 3, line 44 - page 5, line 49 *<br>* page 6, line 18 - page 8, line 4 * | 1,6-8, 13,20, 21,24 | C09D7/12<br>C09D5/00<br>B05D7/00 |
| A | DE 195 05 892 C (GOLDSCHMIDT AG TH) | 6 | |
| A | PATENT ABSTRACTS OF JAPAN vol. 095, no. 005, 30 June 1995 & JP 07 048560 A (TOSHIBA SILICONE CO LTD), 21 February 1995,<br>* abstract * | 6 | |
| A | WO 95 28452 A (NIPPON PAINT CO LTD ;MIYAZOE SEIGO (JP); ITO ETSUYUKI (JP); FUSHIM) | 27,28 | |

TECHNICAL FIELDS SEARCHED (Int.Cl.6)
C09D
B05D

The present search report has been drawn up for all claims

| Place of search | Date of completion of the search | Examiner |
|---|---|---|
| THE HAGUE | 16 January 1998 | Miller, A |

CATEGORY OF CITED DOCUMENTS
X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)